# EUROPEAN PATENT APPLICATION

(11) **EP 4 726 516 A1**
(43) Date of publication of application: **15.04.2026**
(21) Application number: 24843290.8
(22) Date of filing: 28.05.2024
(51) Int. Cl.: G06F 3/04842, G06F 3/0488, G06F 3/041, G06F 3/04817, G06F 3/0482

(54) **ELECTRONIC DEVICE, METHOD, AND COMPUTER-READABLE MEDIUM FOR DISPLAYING VISUAL OBJECT**

(30) Priority: 20.07.2023 KR 20230094937; 07.11.2023 KR 20230153146
(71) Applicant: Samsung Electronics Co., Ltd., Suwon-si, Gyeonggi-do 16677 (KR)
(72) Inventor: YANG, Minho, Suwon-si Gyeonggi-do 16677 (KR); LIM, Eunsil, Suwon-si Gyeonggi-do 16677 (KR); JWA, Yeonjoo, Suwon-si Gyeonggi-do 16677 (KR); LEE, Jaemyoung, Suwon-si Gyeonggi-do 16677 (KR); CHOI, Jungwoo, Suwon-si Gyeonggi-do 16677 (KR)
(74) Representative: Gulde & Partner
(86) International application number: PCT/KR2024/007266
(87) International publication number: WO 2025/018569

(57) **Abstract**

In embodiments, an electronic device is provided. The electronic device may comprise: a memory storing instructions, a processor, and a display. The instructions, when executed by the processor, may cause the electronic device to: display a first visual object at a first spot via the display, the first visual object being the topmost visual object among a plurality of visual objects stacked according to an arrangement sequence; display one or more visual objects other than the first visual object among the plurality of visual objects via the display while the first visual object is being displayed to move in response to a user input to the first visual object; and after the user input, display the first visual object at a second spot, dependent on the user input, via the display. The one or more visual objects may be displayed to sequentially follow the movement path of the first visual object according to the arrangement sequence while the first visual object is being displayed to move.

## Description

### [Technical Field]

The disclosure relates to an electronic device, a method, and a computer-readable medium for displaying a visual object.

### [Background Art]

An electronic device may execute an application. The electronic device may display a screen of an application in execution through a display. The electronic device may display at least a part of the screen of the application through a pop-up window of the display.

The above information is presented as background information only to assist with an understanding of the disclosure. No determination has been made, and no assertion is made, as to whether any of the above might be applicable as prior art with regard to the disclosure.

### [Detailed Description of the Invention]

### [Technical Solution]

In embodiments, an electronic device is provided. The electronic device may include memory storing instructions, a processor, and a display. The instructions, when executed by the processor, may cause the electronic device to display a first visual object at a top of a plurality of visual objects stacked according to an arrangement order at a first point through the display, display one or more visual objects different from the first object among the plurality of visual objects through the display, while the first visual object is displayed to move in response to a user input for the first visual object, and display, after the user input, the first visual object at a second point according to the user input through the display. The one or more visual objects may be displayed to follow a movement path of the first visual object sequentially according to the arrangement order, while the first visual object is displayed to move.

In embodiments, a method performed by an electronic device is provided. The method may include displaying a first visual object at a top of a plurality of visual objects stacked according to an arrangement order at a first point through the display. The method may include displaying one or more visual objects different from the first object among the plurality of visual objects through the display, while the first visual object is displayed to move in response to a user input for the first visual object. The method may include displaying, after the user input, the first visual object at a second point according to the user input through the display. The one or more visual objects may be displayed to follow a movement path of the first visual object sequentially according to the arrangement order, while the first visual object is displayed to move.

In embodiments, a non-transitory computer-readable medium is provided. The non-transitory computer-readable medium may include a memory storing instructions. The instructions, when executed by a processor, may cause an electronic device to display a first visual object at a top of a plurality of visual objects stacked according to an arrangement order at a first point through a display, display one or more visual objects different from the first object among the plurality of visual objects through the display, while the first visual object is displayed to move in response to a user input for the first visual object, and display, after the user input, the first visual object at a second point according to the user input through the display. The one or more visual objects may be displayed to follow a movement path of the first visual object sequentially according to the arrangement order, while the first visual object is displayed to move.

### [Brief Description of the Drawings]

FIG. 1 is a block diagram of an electronic device in a network environment according to an embodiment.
FIG. 2 illustrates examples of stacked visual objects.
FIGS. 3A to 3B illustrate examples of movement of visual objects.
FIG. 4 illustrates an example of movement of a visual object according to an attitude of an electronic device.
FIG. 5 illustrates an example of a stack of visual objects associated with pop-up windows.
FIG. 6 illustrates an example of reordering of visual objects.
FIG. 7 illustrates an example of movement of a container object and a visual object.
FIG. 8 illustrates an example of changing in orientation of a container object and a visual object.
FIGS. 9A and 9B illustrate an example of a preview window of an application associated with a visual object.
FIGS. 10A to 10B illustrate examples of displaying pop-up windows.
FIGS. 11A and 11B illustrate examples of alignment of pop-up windows.
FIGS. 12A and 12B illustrate examples of minimizing of arranged pop-up windows.
FIGS. 13A to 13B illustrate examples of movement of stacked visual objects.
FIGS. 14A to 14B illustrate examples of data movement between applications.
FIG. 15 illustrates an example of displaying pop-up windows.
FIG. 16 illustrates an example of displaying pop-up windows according to pinch-out.
FIG. 17 illustrates an example of a visual object for displaying pop-up windows.

### [Mode for Carrying out the Invention]

The terms used in the disclosure are merely used to better describe a certain embodiment and may not be intended to limit the scope of other embodiments. A singular expression may include a plural expression, unless the context explicitly dictates otherwise. The terms used herein, including technical and scientific terms, may have the same meanings as those commonly understood by those skilled in the art to which the disclosure pertains. Terms defined in a general dictionary among the terms used in the disclosure may be interpreted as having the same or similar meaning as those in the context of the related art, and they are not to be construed in an ideal or overly formal sense, unless explicitly defined in the disclosure. In some cases, even the terms defined in the disclosure may not be interpreted to exclude embodiments of the disclosure.

In various embodiments of the disclosure described below, a hardware approach will be described as an example. However, since the various embodiments of the disclosure may include a technology that utilizes both the hardware-based approach and the software-based approach, the various embodiments are not intended to exclude the software-based approach.

As used in the following description, terms referring to a signal (e.g., signal, information, message, signaling), terms referring to a screen (e.g., screen, window, mini-window, pop-up window, pane), terms referring to a parameter related to a stacked order (e.g., z-order, z-index, arrangement order, stack order, sorting value, stack value), terms referring to a parameter related to the degree of transparency (e.g., opacity, transparency), terms for operation states (e.g., step, operation, procedure), terms referring to network entities, terms referring to components of a device, and so on are only exemplified for convenience of description. Accordingly, the disclosure is not limited to those terms described below, and other terms having the same or equivalent technical meaning may be used therefor.

Further, in the disclosure, the expressions 'greater than' or 'less than' may be used to determine whether a specific condition is satisfied or fulfilled, but it is merely of a description to represent an example and is not intended to exclude the meaning of 'greater than or equal to' or 'less than or equal to'. A condition described as 'greater than or equal to' may be replaced with 'greater than,' a condition described as 'less than or equal to' may be replaced with 'less than,' and a condition described as 'greater than or equal to and less than' may be replaced with 'greater than and less than or equal to', respectively. Furthermore, hereinafter, 'A' to 'B' means at least one of the elements from A (including A) to B (including B). Hereinafter, 'C' and/or 'D' means including at least one of 'C' or 'D', that is, {'C', 'D', or 'C' and 'D'}.

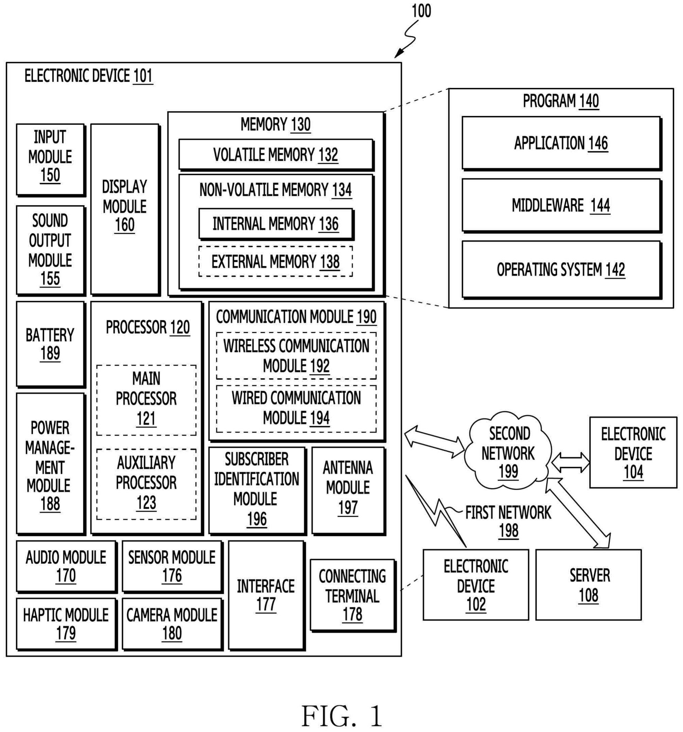

FIG. 1 is a block diagram of an electronic device in a network environment according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In an embodiment, at least one of the components (e.g., the connecting terminal 178) may be omitted from the electronic device 101, or one or more other components may be added in the electronic device 101. In an embodiment, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may, for example, control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., the electronic device 102)(e.g., speaker or headphone) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

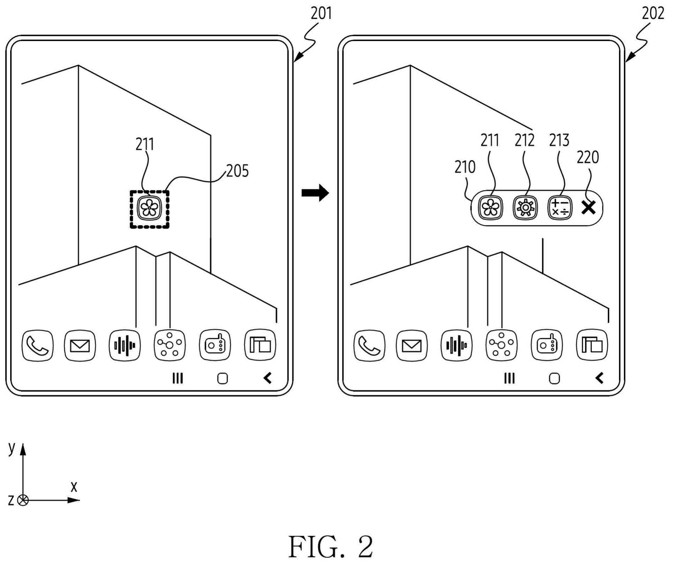

FIG. 2 illustrates an example of stacked visual objects. The stack of the visual objects may mean that the visual objects are stacked in a direction (e.g., Z-axis direction) perpendicular to a face of a display (e.g., the display module 160). For example, an electronic device (e.g., electronic device 101) may display only the topmost visual object to represent the stacked visual objects. For example, in order to represent the stacked visual objects, the electronic device (e.g., the electronic device 101) may arrange the visual objects according to a stacked order (hereinafter, stack order) and display the arranged visual objects.

Referring to FIG. 2, on a first screen 201, the electronic device 101 may display the topmost visual object (e.g., a first visual object 211) among a plurality of the stacked visual objects through a display (e.g., display module 160). The plurality of visual objects may include a first visual object 211, a second visual object 212, and a third visual object 213. For example, each visual object of the visual objects may include an icon for representing an application (hereinafter, app icon). An app icon may be referred to as an application icon, an app object, an execution object, or a term having an equivalent technical meaning, other than the app icon. Although not shown in FIG. 2, the electronic device 101 may display a pop-up window of an application. An execution screen of the application may be displayed through the pop-up window. The size of the pop-up window may be minimized in response to a reduction input for the displayed pop-up window. The electronic device 101 may display the app icon corresponding to the application. To display app icons corresponding to a plurality of applications in one region, the app icons may be stacked in a direction (e.g., Z-axis direction) perpendicular to the display.

The electronic device 101 may stack the visual objects. For example, the electronic device 101 may display a first pop-up window of a first application associated with the first visual object 211. The electronic device 101 may display a second pop-up window of a second application associated with the second visual object 212. The electronic device 101 may display a third pop-up window of a third application associated with the third visual object 213. The electronic device 101 may stack the third visual object 213 in response to a reduction input (e.g., pop-up window minimization input) for the third pop-up window. The electronic device 101 may stack the second visual object 212 in response to a reduction input for the second pop-up window. The electronic device 101 may stack the first visual object 211 in response to a reduction input for the first pop-up window. Such a stacking of a visual object may represent piling up the visual object in a container for the pop-up windows. The container may be used to allow a user to easily display a pop-up window from an app icon. The container may be referred to as palette, tray, accommodation object, accommodation container, minimization tray, control pad, receiving object, or other term having an equivalent technical meaning, in addition to a container. For example, the third visual object 213, the second visual object 212, and the first visual object 211 may be stacked in the container in this order. Meanwhile, in addition to the reduction input of each pop-up window in the above example, the stacking of the visual objects may be performed according to a predetermined input (e.g., a home button, a recent button, a predetermined gesture button) while the pop-up windows are displayed.

The electronic device 101 may receive a user input 205 for the first visual object 211. For example, the user input 205 may include a tap input, a double-tap input, a press input, a drag input, a fling input, or a designated gesture input. Hereinafter, embodiments will be described on the basis that the user input 205 is the tap input. The electronic device 101 may display a container (e.g., container object 210) for the first visual object 211 based on the user input 205. The electronic device 101 may display one or more visual objects (e.g., the second visual object 212 and the third visual object 213) stacked with the first visual object 211 based on the user input 205. For example, upon receiving the user input 205, the electronic device 101 may display a second screen 202.

In the second screen 202, the electronic device 101 may display the container object 210 and a plurality of visual objects (e.g., the first visual object 211, the second visual object 212, the third visual object 213) via a display (e.g., the display module 160). The container object 210 may represent a container for the pop-up window. The container object 210 may be used to represent each of the stacked visual objects. Further, the container object 210 may be used to display a pop-up window of the application associated with the visual object, based on a user input (e.g., touch input) for the corresponding visual object. The stacked visual objects are arranged on the container object 210. For example, the electronic device 101 may display the stacked visual objects arranged in the order of the first visual object 211, the second visual object 212, and the third visual object 213 on the container object 210. Each of the stacked visual objects is arranged according to the stack order. For example, the order (hereinafter, arrangement order) that the stacked visual objects are arranged may indicate the stack order of the visual objects. According to an embodiment, the electronic device 101 may terminate the stacking function of the visual objects. The container object 210 may further include an exit button 220 for terminating the stack. For example, based on a user input for the exit button 220, the electronic device 101 may not display the container object 210. Based on the user input for the exit button 220, the electronic device 101 may not display the first visual object 211 stacked at the topmost position. Based on the user input for the exit button 220, the electronic device 101 may cease displaying the container object 210 and terminate or suspend the applications for the stacked visual objects. Further, according to an embodiment, the electronic device 101 may terminate displaying the container object 210 and display the first visual object 211 as in a previous screen (e.g., a first screen 301). For example, the electronic device 101 may receive a user input in a region other than the container object 210. The electronic device 101 may terminate displaying of the container object 210 based on the user input. The electronic device 101 may display the first visual object 211 stacked at the top among the plurality of visual objects based on the user input.

As illustrated in FIG. 2, the first visual object 211, the second visual object 212, and the third visual object 213 may be stacked. To control the stacked visual objects, the electronic device 101 may set stack information for each visual object. For example, the stack information may include a z-index. The z-index may indicate the depth (e.g., z-axis value) relative to the screen (e.g., xy plane) of the display. Hereinafter, the z-index of the disclosure is described on the basis of the direction of the Z-axis being opposite to the direction that the display faces, but this direction is only of an example. The z-index in which (+)Z-axis direction is set toward the direction that the display faces may also be understood as one embodiment of the disclosure. The stack order of the visual objects may be determined according to the z-indices of the stacked visual objects. The electronic device 101 may set the z-index for the visual object. For example, the stack information may include a priority value. The priority may include a value for indicating the arrangement order. The stack order of the visual objects may be determined according to the priority values of the stacked visual objects. The electronic device 101 may set the priority for the visual object. The electronic device 101 may acquire the stack information of each visual object to arrange the stacked visual objects according to the stack order. The electronic device 101 may arrange the visual objects based on the stack information of each visual object. The electronic device 101 may display the arranged visual objects.

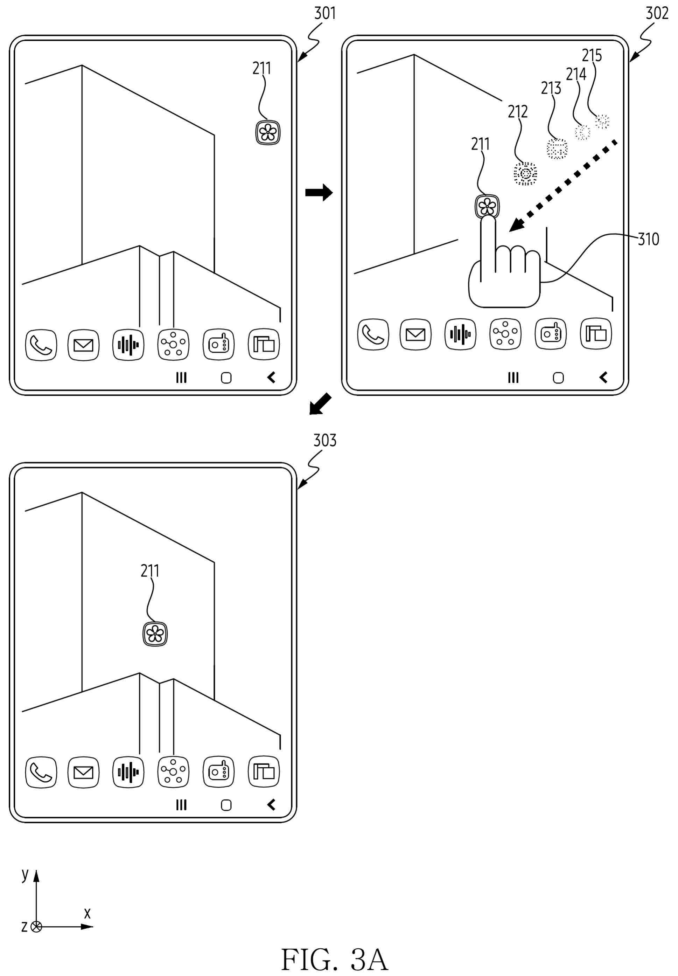

FIGS. 3A to 3B illustrate an example of movement of visual objects. The visual objects may be stacked. The descriptions for FIG. 2 may be referenced to describe the movement of the stacked visual objects.

Referring to FIG. 3A, in a first screen 301, the electronic device 101 may display the first visual object 211.

While displaying the first visual object 211, the electronic device 101 may be executing applications in the background that are associated with visual objects stacked below the first visual object 211 (e.g., the second visual object 212, the third visual object 213, the fourth visual object 214, and the fifth visual object 215). Although applications associated with other visual objects besides the first visual object 211 are being executed in the electronic device 101, a user may be unable to know how many visual objects are stacked below the first visual object 211. Therefore, the electronic device 101 may display one or more visual objects stacked in addition to the first visual object 211, based on moving of the first visual object 211.

The electronic device 101 may receive a user input 310 for moving the first visual object 211. For example, the user input 310 may include a drag input for the first visual object 211. For example, the user input 310 may include a fling input for the first visual object 211. The fling input may indicate an action of moving an input object (e.g., a finger, a pen) and then flickering it. The electronic device 101 may display a plurality of visual objects stacked in the electronic device 101 based on the user input 310. The plurality of visual objects may include the first visual object 211, the second visual object 212, the third visual object 213, the fourth visual object 214, and the fifth visual object 215. The plurality of visual objects may be stacked in the order of the fifth visual object 215, the fourth visual object 214, the third visual object 213, the second visual object 212, and the first visual object 211. The first visual object 211 may be located at the topmost position. For example, the z-index of the first visual object 211 may be the smallest, and the z-index of the fifth visual object 215 may be the largest. The electronic device 101 may display the movement of the first visual object 211 based on the user input 310. While the first visual object 211 is displayed to move, the electronic device 101 may display other visual objects (e.g., the second visual object 212, the third visual object 213, the fourth visual object 214, and the fifth visual object 215) to follow the movement path of the first visual object. Hereinafter, for convenience of description, the other visual objects, that is, the visual objects following the topmost visual object, may be referred to as subsequent visual objects.

The subsequent visual objects may be arranged along the movement path of the first visual object 211 according to the arrangement order. For example, the second visual object 212, the third visual object 213, the fourth visual object 214, and the fifth visual object 215 may be arranged sequentially according to the movement path of the first visual object 211. Through the visual objects arranged along the movement path, a user may identify the visual objects stacked below the first visual object 211. For example, the electronic device 101 may display a second screen 302 based on the user input 310.

According to an embodiment, the electronic device 101 may control the opacity of the visual object. The opacity of the visual object may indicate the degree of opaqueness of the visual object compared to the background screen, on the display shown to the user. For example, the higher the opacity, the less the background screen may be displayed behind the visual object. The lower the opacity, the clearer the background screen may be displayed behind the visual object. As an example, the opacity may have a value between 0 and 1, where 0 indicates transparency, and 1 indicates complete opaqueness. The opacity may also be referred to by other terms indicating equivalent technical meaning, such as fade level, transparency, blur level, or visibility, in addition to the opacity. To intuitively express the order of other visual objects depending upon the movement path of the first visual object 211, the electronic device 101 may control the opacity of each visual object. For example, the electronic device 101 may display the second visual object 212, the third visual object 213, the fourth visual object 214, and the fifth visual object 215 such that the opacity decreases according to the arrangement order. Each visual object may gradually become more transparent in the order of the second visual object 212, the third visual object 213, the fourth visual object 214, and the fifth visual object 215. The opacity of the second visual object 212 may be set higher than the opacity of the third visual object 213. The opacity of the third visual object 213 may be set higher than the opacity of the fourth visual object 214. The opacity of the fourth visual object 214 may be set higher than the opacity of the fifth visual object 215. For example, the electronic device 101 may control the opacity of the visual object based on the stack information (e.g., z-index, priority) of the visual object. The electronic device 101 may set the opacity of the visual object higher, as the priority value of the visual object is higher or the z-index is lower. For example, since the z-index of the second visual object 212 is lower than the z-index of the third visual object 213, the opacity of the second visual object 212 may be set lower than the opacity of the third visual object 213. The electronic device 101 may set the opacity of the visual object lower as the priority value of the visual object is lower or the z-index is higher. For example, since the z-index of the fourth visual object 214 is greater than the z-index of the first visual object 211, the opacity of the fourth visual object 214 may be set lower than the opacity of the first visual object 211.

According to an embodiment, the electronic device 101 may control the scaling of the visual object. The scaling of the visual object may indicate increasing or decreasing the size of the visual object. A scale value for the scaling may be set for the visual object. The visual object may be displayed in a region corresponding to the set scale value. For example, the higher the scale value, the larger the visual object may be displayed. The lower the scale value, the smaller the visual object may be displayed. For example, the scale value of each visual object in the second screen 202 may be the same. The size of each visual object in the second screen 202 may be the same. The size of each visual object may be adjusted through the adjustment of the scale value. The scale value of the first visual object 211 in the first screen 301 may be a default value (e.g., 1). To intuitively express the order of other visual objects according to the movement path of the first visual object 211, the electronic device 101 may control the scale value of each visual object. For example, the electronic device 101 may display the second visual object 212, the third visual object 213, the fourth visual object 214, and the fifth visual object 215 such that the scale value decreases according to the arrangement order. Each visual object may gradually become smaller in the order of the second visual object 212, the third visual object 213, the fourth visual object 214, and the fifth visual object 215. The size of the second visual object 212 may be larger than the size of the third visual object 213. The size of the third visual object 213 may be larger than the size of the fourth visual object 214. The size of the fourth visual object 214 may be larger than the size of the fifth visual object 215. For example, the electronic device 101 may control the scale value of the visual object based on the stack information (e.g., z-index, priority) of the visual object. The electronic device 101 may set the scale value of the visual object larger as the priority value of the visual object is higher or the z-index is lower. For example, since the z-index of the second visual object 212 is smaller than the z-index of the third visual object 213, the scale value of the second visual object 212 may be set larger than the scale value of the third visual object 213. The size of the second visual object 212 may be larger than the size of the third visual object 213.

In a third screen 303, the electronic device 101 may display the first visual object 211. After the movement of the first visual object 211 is complete, the subsequent visual objects (e.g., the second visual object 212, the third visual object 213, the fourth visual object 214, and the fifth visual object 215) may no longer be displayed. The electronic device 101 may display the first visual object 211 at a position changed according to the user input 310. For example, the position of the first visual object 211 in the first screen 301 (hereinafter, referred to as a first position) may be different from the position of the second visual object in the third screen 303 (hereinafter, referred to as a second position). The electronic device 101 may display the first visual object 211 at the second position based on a drag input from the first position to the second position. The electronic device 101 may display the first visual object 211 at the second position based on a fling input from the first position.

In FIG. 3A, the visual objects following the first visual object 211 are shown to gradually decrease in size or decrease in opacity according to the arrangement order, but embodiments of the disclosure are not limited thereto. According to an embodiment, the visual objects following the first visual object 211 may decrease in opacity according to the arrangement order, but the size of the visual objects following the first visual object 211 and the size of the first visual object 211 may be the same. According to another embodiment, other visual objects following the first visual object 211 may decrease in size according to the arrangement order, but the opacity of the other visual objects following the first visual object 211 may be the same as the opacity of the first visual object 211. According to yet another embodiment, the opacity and size of the other visual objects following the first visual object 211 may be the same as the opacity and size of the first visual object 211, respectively.

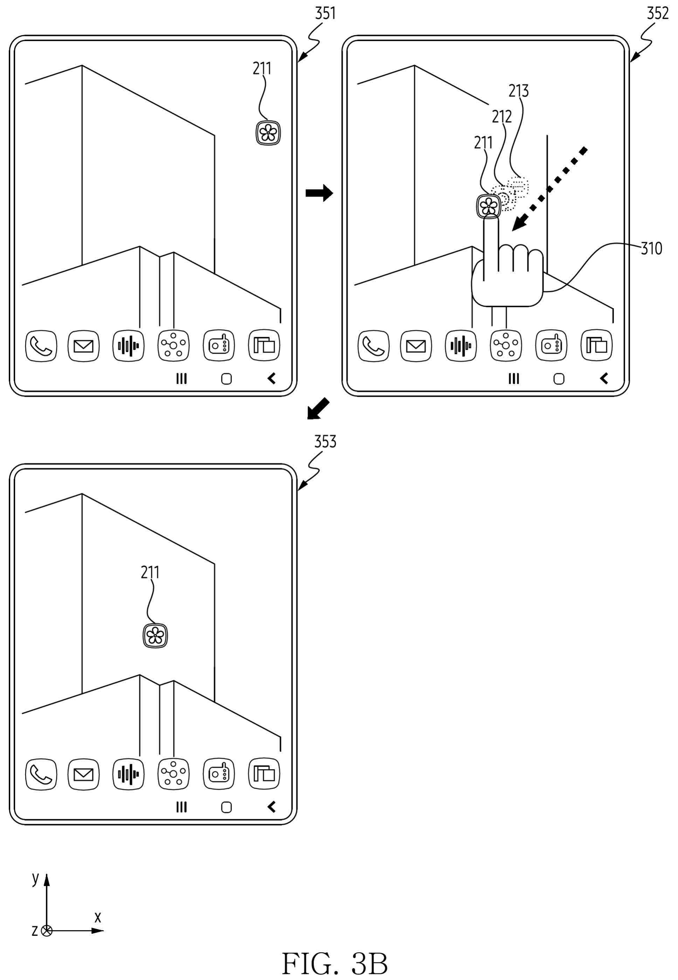

In FIG. 3A, an example of displaying a plurality of stacked visual objects based on the opacity and the scaling has been described. The electronic device 101 may indicate to the user the characteristics of a set of stacked visual objects (hereinafter, a stack set) in addition to varying the effect of the subsequent visual objects. For example, the electronic device 101 may indicate to the user the number of visual objects included in the stack set. Hereinafter, FIG. 3B describes an example situation where three visual objects are stacked.

Referring to FIG. 3B, in a first screen 351, the electronic device 101 may display the first visual object 211. In a second screen 352, the electronic device 101 may receive a user input 310 for moving the first visual object 211. For example, the user input 310 may include a drag input for the first visual object 211. For example, the user input 310 may include a fling input for the first visual object 211. The electronic device 101 may display a plurality of visual objects stacked in the electronic device 101 based on the user input 310. The plurality of visual objects may include the first visual object 211, the second visual object 212, and the third visual object 213. The electronic device 101 may display the second visual object 212 and the third visual object 213 to follow the first visual object 211 along the movement path of the first visual object 211. In a third screen 353, the electronic device 101 may display the first visual object 211. After the movement of the first visual object 211 is complete, the subsequent visual objects (e.g., the second visual object 212 and the third visual object 213) may no longer be displayed. The electronic device 101 may display the first visual object 211 at a position changed according to the user input 310.

The electronic device 101 may control a movement speed of one or more visual objects following the first visual object 211 (e.g., the second visual object 212 and the third visual object 213 in FIG. 3B, and the second visual object 212, the third visual object 213, the fourth visual object 214, and the fifth visual object 215 in FIG. 3A), based on the number of stacked visual objects (e.g., five in FIG. 3A, three in FIG. 3B). Hereinafter, for convenience of description, the visual object following the topmost visual object may be referred to as a subsequent visual object. The movement speed may indicate a speed at which an individual visual object moves, a tracking speed at which the subsequent visual object follows the topmost visual object, or a time interval during which the movement of the entire subsequent visual objects is completed along the movement path of the topmost visual object (e.g., the interval between the timing point the first visual object 211 begins movement and the timing point the last subsequent visual object (e.g., the fifth visual object 215 in FIG. 3A or the third visual object 213 in FIG. 3B)) completes its movement).

According to an embodiment, the electronic device 101 may display subsequent visual objects through spring animation. The electronic device 101 may set parameters (e.g., stiffness, damping ratio) for the spring animation based on the number of stacked visual objects. For example, the damping ratio may be set higher so that the user of the electronic device 101 feels a faster movement as the number of stacked visual objects is smaller. The damping ratio may be set lower so that the user of the electronic device 101 feels a slower movement as the number of stacked visual objects is larger. For example, the stiffness may be set lower as the number of stacked visual objects is smaller. The stiffness may be set higher as the number of stacked visual objects is larger.

According to an embodiment, the electronic device 101 may control the movement time point of the subsequent visual object based on the number of the stacked visual objects. The electronic device 101 may set the movement time for the subsequent visual object to be closer to the starting time of movement for the topmost visual object, so that the user of the electronic device 101 perceives a faster movement, as the number of stacked visual objects decreases. The electronic device 101 may set the movement time for a subsequent visual object to be further away from the time when the movement of the topmost visual object is displayed, so that the user of the electronic device 101 perceives a slower movement, as the number of stacked visual objects increases.

Comparing the second screen 302 of FIG. 3A and the second screen 352 of FIG. 3B, five visual objects are stacked in the second screen 302 and three visual objects are stacked in the second screen 352. In both cases, the second visual object 212 may move along the movement path of the first visual object 211. The number of stacked visual objects in the second screen 302 is greater than the number of stacked visual objects in the second screen 352. Therefore, on the basis of the time point when the first visual object 211 is moved to the second position, the position of the second visual object 212 in the second screen 352 may be ahead of the position of the second visual object 212 in the second screen 302. Comparing the second screen 302 and the second screen 352, the movement speed of each subsequent visual object in the second screen 302 may be slower than the movement speed of each subsequent visual object in the second screen 352. Accordingly, the distance between the stacked visual objects in the second screen 302 may be greater than the distance between the stacked visual objects in the second screen 352.

In FIGS. 3A to 3B, an example of indicating the number of stacked visual objects through the movement of the stacked visual objects has been described. However, embodiments of the disclosure are not limited thereto. To indicate the properties of the stacked visual objects, the electronic device 101 may display explicit information. For example, the electronic device 101 may display a value indicating the number of stacked visual objects next to the first visual object 211. As an example, in FIG. 3A, the electronic device 101 may display '5' around the first visual object 211. As an example, in FIG. 3B, the electronic device 101 may display '3' around the first visual object 211. For example, while the first visual object 211 moves along the movement path according to the user input 310, the electronic device 101 may display a value indicating the number of stacked visual objects adjacent to the movement path. The subsequent visual objects (e.g., the second visual object 212, the third visual object 213) may be displayed along with the value.

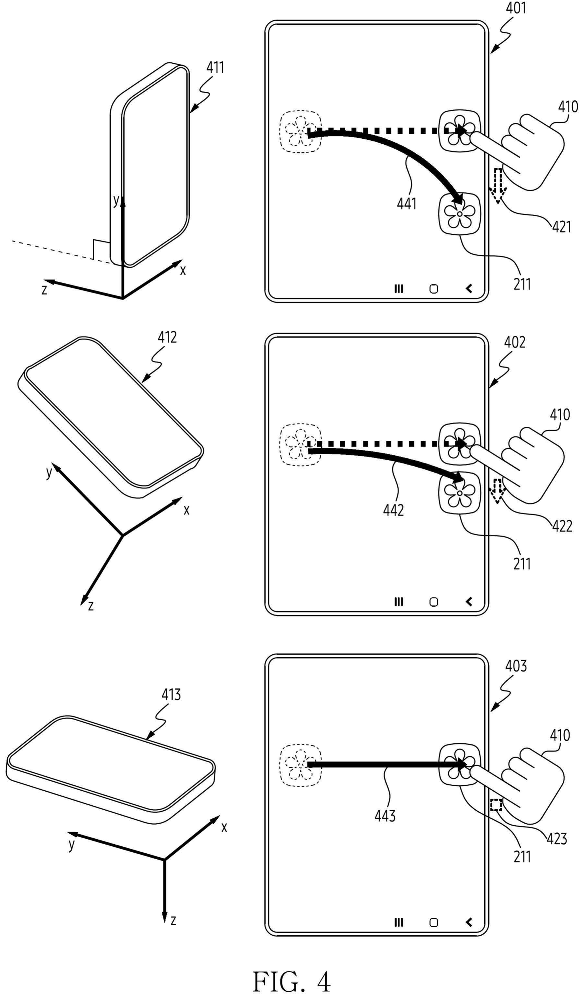

FIG. 4 illustrates an example of movement of a visual object according to an attitude of an electronic device (e.g., electronic device 101). According to an embodiment, the gravity effect according to the attitude of the electronic device 101 may be represented through the movement of the visual object. Here, the gravity effect does not indicate the gravity actually acting on the first visual object 211, but may indicate a change in the movement path so that the user of the electronic device 101 may feel an attractive force due to the direction of gravity on the screen displayed. The descriptions related to FIGS. 2 to 3B may be referenced to explain the movement of the stacked visual objects.

Referring to FIG. 4, the electronic device 101 may display the first visual object 211. The electronic device 101 may receive a user input 410 for moving the first visual object 211 in a certain direction (e.g., (+)x-axis direction). For example, the user input 410 may include a drag input or a fling input. Hereinafter, embodiments will be described on the basis of the user input 410 being the fling input.

In a first attitude 411 of the electronic device 101, the direction that the display of the electronic device 101 faces may be substantially parallel to the ground. The electronic device 101 may acquire the tilt (e.g., about 90 degrees) of the electronic device 101 through at least one sensor (e.g., sensor module 176, gyro sensor). The electronic device 101 may determine a first gravity magnitude 421 based on the tilt. Referring to a first screen 401, based on the user input 410, the first visual object 211 may move along a first movement path 441. The first movement path 441 may be determined based on the first gravity magnitude 421. To represent the influence due to the gravity, the electronic device 101 may further move the first visual object 211 by a certain distance in the gravity direction (e.g., (-)y-axis direction). The certain distance may be determined based on the first gravity magnitude 421.

In a second attitude 412 of the electronic device 101, the direction that the display of the electronic device 101 faces may form a certain angle (e.g., about 30 degrees) with the ground. The electronic device 101 may acquire the tilt (e.g., about 60 degrees) of the electronic device 101 through at least one sensor (e.g., sensor module 176, gyro sensor). The electronic device 101 may determine a second gravity magnitude 422 based on the tilt. Referring to a second screen 402, based on the user input 410, the first visual object 211 may move along a second movement path 442. The second movement path 442 may be determined based on the second gravity magnitude 422. To represent the influence due to the gravity, the electronic device 101 may further move the first visual object 211 by a certain distance in the downward direction (e.g., (-)y-axis direction). The certain distance may be determined based on the second gravity magnitude 422. To indicate that less gravity is acting in the second attitude 412 than in the first attitude 411, the certain distance in (-)y-axis direction of the first movement path 441 may be shorter than the certain distance in (-)y-axis direction of the second movement path 442.

In a third attitude 413 of the electronic device 101, the direction that the display of the electronic device 101 faces may be substantially perpendicular to the ground. The electronic device 101 may acquire the tilt (e.g., about 0 degrees) of the electronic device 101 through at least one sensor (e.g., sensor module 176, gyro sensor). The electronic device 101 may determine a third gravity magnitude 423 based on the tilt. As an example, the third gravity magnitude 423 may be substantially '0'. Referring to a third screen 403, based on the user input 410, the first visual object 211 may move along a third movement path 443. The third movement path 443 may be determined based on the third gravity magnitude 423. Since a movable space (e.g., x-y plane) of the first visual object 211 is perpendicular to the gravity direction (e.g., z-axis) in the third attitude 413, the electronic device may not move the first visual object 211 in the downward direction (e.g., the (-)y-axis direction). The first visual object 211 may move only in the (+)x-axis direction according to the user input 410.

In FIG. 4, the movement of the first visual object 211 while a plurality of visual objects are stacked has been described as an example, but embodiments of the disclosure are not limited thereto. Not only in case where a plurality of visual objects are stacked, but also in case where a single visual object is stacked in a container, the electronic device 101 may represent the effect due to the gravity of FIG. 4 on the movement of the single visual object. The electronic device 101 may determine the movement path of the single visual object for the user input based on the tilt of the electronic device 101.

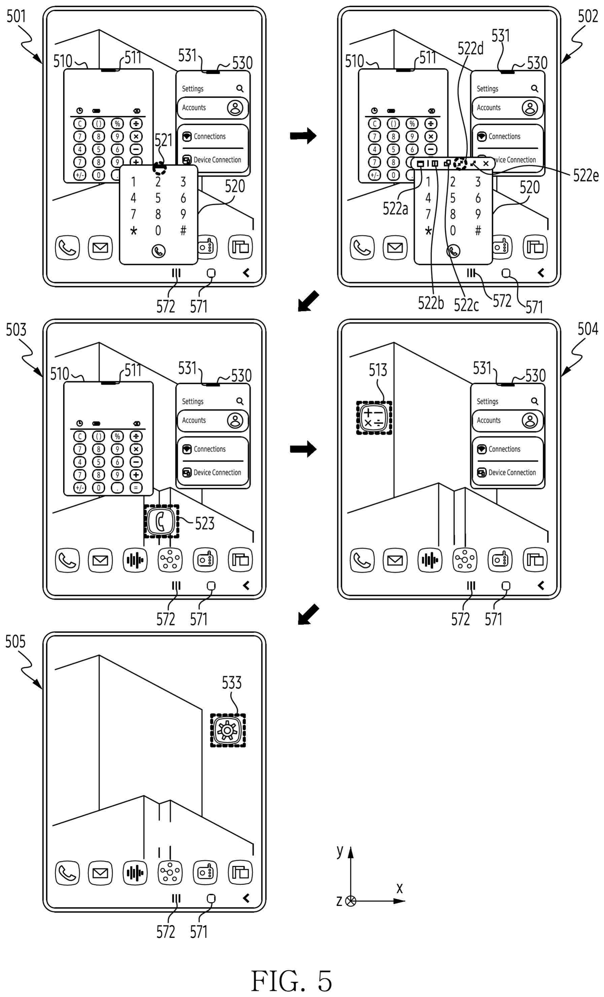

FIG. 5 illustrates an example of stacking of visual objects related to pop-up windows. A pop-up window may indicate an execution screen displayed as a pop-up. The pop-up window may be used to use another application, while using a home screen or a screen of an application. In addition to the pop-up window, the pop-up window may be referred to as a window, a mini window, a provisional window, an over window, a sliding window, a slide-over window, and/or any other term having an equivalent technical meaning thereto. FIG. 5 describes an example of a procedure for stacking the visual objects of FIG. 2.

Referring to FIG. 5, in a first screen 501, the electronic device 101 may display a plurality of pop-up windows. For example, the electronic device 101 may display a first pop-up window 510. For example, the first pop-up window 510 may represent an execution screen of a first application (e.g., calculator application). The electronic device 101 may display a second pop-up window 520. For example, the second pop-up window 520 may represent an execution screen of a second application (e.g., phone application). The electronic device 101 may display a third pop-up window 530. For example, the third pop-up window 530 may represent an execution screen of a third application (e.g., settings application). Each pop-up window may include a handle for movement and/or control. For example, the first pop-up window 510 may include a first handle 511. The second pop-up window 520 may include a second handle 521. The third pop-up window 530 may include a third handle 531. In case where a user of the electronic device 101 uses a specific pop-up window or a function related to the specific pop-up window is executed, the specific pop-up window among the plurality of pop-up windows may be activated. The activation may be referred to as focusing, recently used, or any other technical term equivalent thereto, in addition to activation. The handle may indicate the activated pop-up window. For example, the second pop-up window 520 may be activated among the first pop-up window 510, the second pop-up window 520, and the third pop-up window 530. The electronic device 101 may receive a user input for the second handle 521. For example, the user input may include a tap input. Based on the user input for the second handle 521, the electronic device 101 may display a second screen 502.

In the second screen 502, the electronic device 101 may display control options for controlling the second pop-up window 520. For example, the displayed control options may include a symbol 522a for pinning the control options to the top, a symbol 522b for a split view of the second pop-up window 520, a symbol 522c for an opacity adjustment function of the second pop-up window 520, a symbol 522d for minimization of the second pop-up window 520, and/or a symbol 522e for maximization of the second pop-up window 520. The electronic device 101 may receive a user input for the symbol 522d for minimization of the second pop-up window 520. Based on the user input for the symbol 522d, the electronic device 101 may display a third screen 503.

In the third screen 503, the electronic device 101 may display a second visual object 523 related to the second pop-up window 520. For example, the second visual object 523 may include an app icon of the second application (e.g., phone application) of the second pop-up window 520. Since there is no visual object to be stacked other than the second visual object 523, the second visual object 523 may be located at the topmost position. Accordingly, the electronic device 101 may display the second visual object 523. The electronic device 101 may receive a user input for the minimization operation of the first pop-up window 510, similar to the minimization operation of the second pop-up window 520 in the first screen 501 and the second screen 502. Based on the user input for the minimization operation of the first pop-up window 510, the electronic device 101 may display a fourth screen 504.

In the fourth screen 504, the electronic device 101 may display a first visual object 513 related to the first pop-up window 510. For example, the first visual object 513 may include the app icon of the first application (e.g., the calculator application) of the first pop-up window 510. The first visual object 513 may be stacked on the second visual object 523. For example, as the first pop-up window 510 was used more recently than the second pop-up window 520, the electronic device 101 may stack the first visual object 513 associated with the first pop-up window 510 on the second visual object 523. Since the first visual object 513 is located at the topmost position among the stacked visual objects, the electronic device 101 may display the first visual object 513. As the first visual object 513 is stacked, the electronic device 101 may cease displaying the second visual object 523. While displaying the first visual object 513, the electronic device 101 may be executing the application (e.g., the phone application) related to the second visual object 523 stacked below the first visual object 513 in the background. The electronic device 101 may receive a user input for the minimization operation of the third pop-up window 530, similar to the minimization operation of the first pop-up window 510. Based on the user input for the minimization operation of the third pop-up window 530, the electronic device 101 may display a fifth screen 505.

In the fifth screen 505, the electronic device 101 may display a third visual object 533 related to the third pop-up window 530. For example, the third visual object 533 may include an app icon of the third application (e.g., the settings application) of the third pop-up window 530. The third visual object 533 may be stacked on the first visual object 513. For example, as the third pop-up window 530 was used more recently than the first pop-up window 510, the electronic device 101 may stack the third visual object 533 associated with the third pop-up window 530 on the first visual object 513. As the third visual object 533 is located at the topmost position among the stacked visual objects, the electronic device 101 may display the third visual object 533. As the third visual object 533 is stacked, the electronic device 101 may cease displaying the first visual object 513. While displaying the third visual object 533, the electronic device 101 may be executing the application (e.g., the calculator application) related to the first visual object 513 and the application (e.g., the phone application) related to the second visual object 523, which are stacked below the third visual object 533, in the background.

In case that the operations of FIG. 5 are performed, a plurality of visual objects may be stacked. For example, the second visual object 523, the first visual object 513, and the third visual object 533 may be stacked sequentially. Since the third visual object 533 is located at the topmost position, the electronic device 101 may display the third visual object 533. Through the operations of FIG. 5, the stacked visual objects described in FIG. 2 may be configured.

In FIG. 5, an example where visual objects are stacked through the control options (e.g., the symbol 522d for minimization) of an individual pop-up window has been described, but embodiments of the disclosure are not limited thereto. The visual objects may be stacked via various inputs. According to an embodiment, the electronic device 101 may switch the specific pop-up window to an app icon through a user input (e.g., drag input) that moves one end (e.g., the top right) of the pop-up window to the opposite end (e.g., the bottom left). The electronic device 101 may minimize the pop-up window through the user input instead of the symbol of the control option. In response to the minimization of the pop-up window, the visual object associated with the pop-up window may be stacked. The visual objects may be stacked through the minimization operation of FIG. 5 and/or the minimization operation using the above user input. According to an embodiment, when the electronic device 101 receives a user input (e.g., tap input) for a designated button (e.g., home button 571, recently executed apps button 572) in a state where a plurality of pop-up windows are displayed (e.g., first screen 501), the electronic device 101 may stack a plurality of visual objects associated with the plurality of pop-up windows. The electronic device 101 may determine the stack order according to the order in which the plurality of pop-up windows were activated (or focused). The electronic device 101 may stack the plurality of visual objects according to the stack order. According to an embodiment, when the electronic device 101 detects a designated gesture (e.g., a gesture related to a home view function, a gesture related to a recent apps view function) in a state where a plurality of pop-up windows are displayed (e.g., first screen 501), the electronic device 101 may stack the plurality of visual objects associated with the plurality of pop-up windows. The electronic device 101 may determine the stack order according to the order in which the plurality of pop-up windows have been activated. The electronic device 101 may stack the plurality of visual objects according to the stack order.

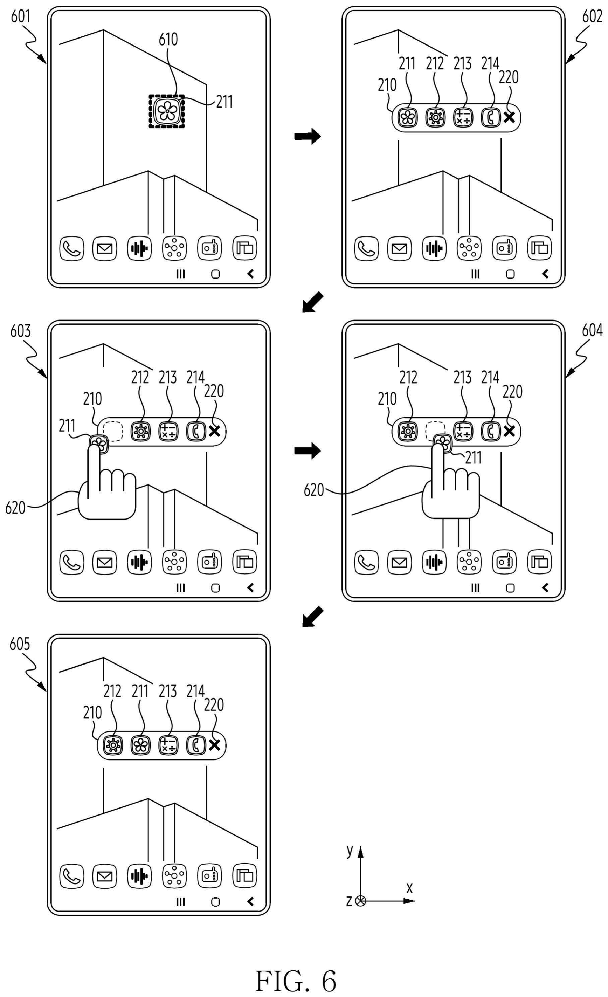

FIG. 6 illustrates an example of reordering of visual objects. The visual objects may be stacked. The visual objects may be arranged through a container, according to the order in which the visual objects are stacked (hereinafter, referred to as stack order). The reordering may indicate a change in the stack order or the arranged order (hereinafter, referred to as arrangement order). The descriptions for FIGS. 2 to 5 may be referenced to explain the stacked visual objects.

Referring to FIG. 6, in a first screen 601, the electronic device 101 may display the first visual object 211. The electronic device 101 may receive a user input 610 for the first visual object 211. For example, the user input 610 may include a tap input, a double tap input, a press input, a drag input, a fling input, or a designated gesture input. Hereinafter, embodiments will be described on the basis of the user input 610 being the tap input. The electronic device 101 may display a second screen 602 based on the user input 610.

In the second screen 602, the electronic device 101 may display the container object 210 and a plurality of visual objects (e.g., the first visual object 211, the second visual object 212, the third visual object 213, and the fourth visual object 214). The container object 210 may represent a container for the pop-up window. The container object 210 may be used to represent each of the stacked visual objects. The container object 210 may be used to display the pop-up window of the application associated with the visual object, based on a user input (e.g., touch input) for the corresponding visual object. The stacked visual objects may be arranged on the container object 210. The first visual object 211, the second visual object 212, the third visual object 213, and the fourth visual object 214 may be stacked. For example, the first visual object 211 may include an app icon for a photo application. The second visual object 212 may include an app icon for a settings application. The third visual object 213 may include an app icon for a calculator application. The fourth visual object 214 may include an app icon for a phone application. The visual objects may be stacked in the order of the fourth visual object 214, the third visual object 213, the second visual object 212, and the first visual object 211. The electronic device 101 may display the stacked visual objects arranged in the order of the first visual object 211, the second visual object 212, the third visual object 213, and the fourth visual object 214 on the container object 210. The arranged order of the stacked visual objects may indicate the stack order of the visual objects.

The electronic device 101 may change the arrangement order. For example, the user of the electronic device 101 may want to arrange the first visual object 211 currently located at the topmost position to be located at the second top position and arrange the second visual object 212 to be located at the topmost position. In a third screen 603, the electronic device 101 may receive a user input 620 (e.g., press, drag-and-drop) for the first visual object 211. For example, the electronic device 101 may select the first visual object 211 through a press input of the user input 620 and may move the first visual object 211 between the second visual object 212 and the third visual object 213 in the container object 210 through a drag-and-drop of the user input 620. In a fourth screen 604, the electronic device 101 may display a space 609 between the second visual object 212 and the third visual object 213 in the container object 210, based on the user input 620. The electronic device 101 may change the arrangement order by moving the selected first visual object 211 into the space 609. The arrangement order of the first visual object 211, the second visual object 212, the third visual object 213, and the fourth visual object 214 may be changed to the arrangement order of the second visual object 212, the first visual object 211, the third visual object 213, and the fourth visual object 214. The electronic device 101 may display a fifth screen 605 based on the user input 620.

In the fifth screen 605, the electronic device 101 may display a plurality of visual objects and the container. The plurality of visual objects may be arranged in the order of the second visual object 212, the first visual object 211, the third visual object 213, the fourth visual object 214, and a fifth visual object 215.

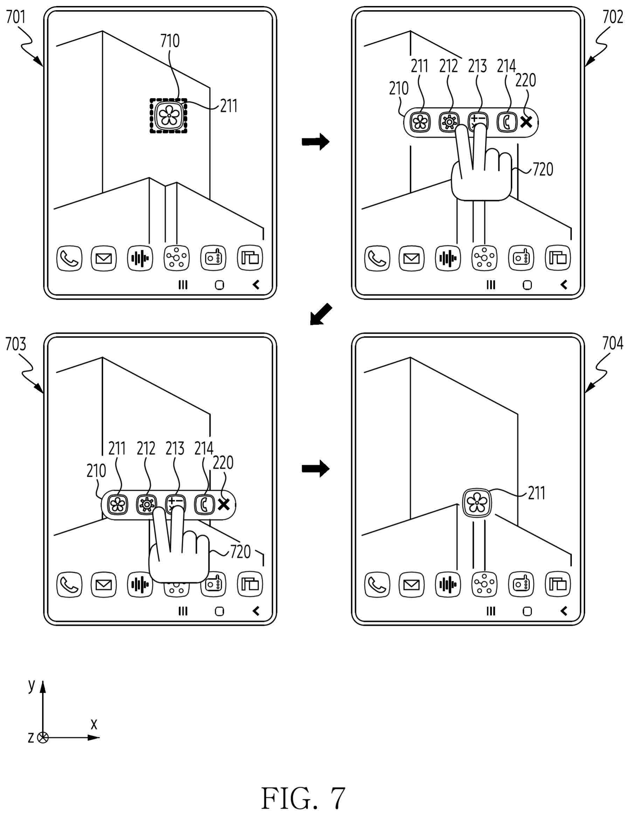

FIG. 7 illustrates an example of a movement of a container object (e.g., the container object 210) and visual objects (e.g., first visual object 211, second visual object 212, third visual object 213). The descriptions for FIGS. 2 to 6 may be referenced to explain the stacked visual objects.

Referring to FIG. 7, in a first screen 701, the electronic device 101 may display the first visual object 211. The electronic device 101 may receive a user input 710 for the first visual object 211. For example, the user input 710 may include a tap input, a double tap input, a press input, a drag input, a fling input, or a designated gesture input. Hereinafter, embodiments will be described based on the user input 710 being the tap input. The electronic device 101 may display a second screen 702 based on the user input 710.

In the second screen 702, the electronic device 101 may display the container object 210 and a plurality of visual objects (e.g., the first visual object 211, the second visual object 212, the third visual object 213, and the fourth visual object 214). The container object 210 may represent a container for the pop-up window. The stacked visual objects are arranged on the container object 210. The first visual object 211, the second visual object 212, the third visual object 213, and the fourth visual object 214 may be stacked. For example, the first visual object 211 may include an app icon for a photo application. The second visual object 212 may include an app icon for a settings application. The third visual object 213 may include an app icon for a calculator application. The fourth visual object 214 may include an app icon for a phone application.

The electronic device 101 may move the container object 210 and the stacked visual objects on the display. For example, the user of the electronic device 101 may want to move the stacked visual objects and the container from the current position to another position all at once. In the second screen 702, the electronic device 101 may receive a user input 720. For example, the user input 720 may include a multi-touch input, a double tap input, a press input, a drag input, a fling input, or a designated gesture input. The multi-touch input may indicate an input (e.g., drag, fling, press, rotation) performed by a plurality of pointers (e.g., finger, pen) touching the screen simultaneously. For example, the user input 720 may include a drag input using two fingers. The electronic device 101 may display a third screen 703 based on the user input 720. In the third screen 703, the electronic device 101 may display the container object 210 and the stacked visual objects at positions different from the respective positions in the second screen 702. The container object 210 and each of the stacked visual objects may move to the position according to the user input 720. For example, the electronic device 101 may display the container object 210 displayed at a first position at a second position based on the user input 720. According to the movement of the container object 210, the plurality of visual objects displayed on the container object 210 may move together.

In a fourth screen 704, the electronic device 101 may receive a user input in a region different from the container object 210 displayed at the second position. The electronic device 101 may cease displaying the container object 210 based on the user input. The electronic device 101 may display the first visual object 211 stacked at the topmost position among the plurality of visual objects based on the user input.

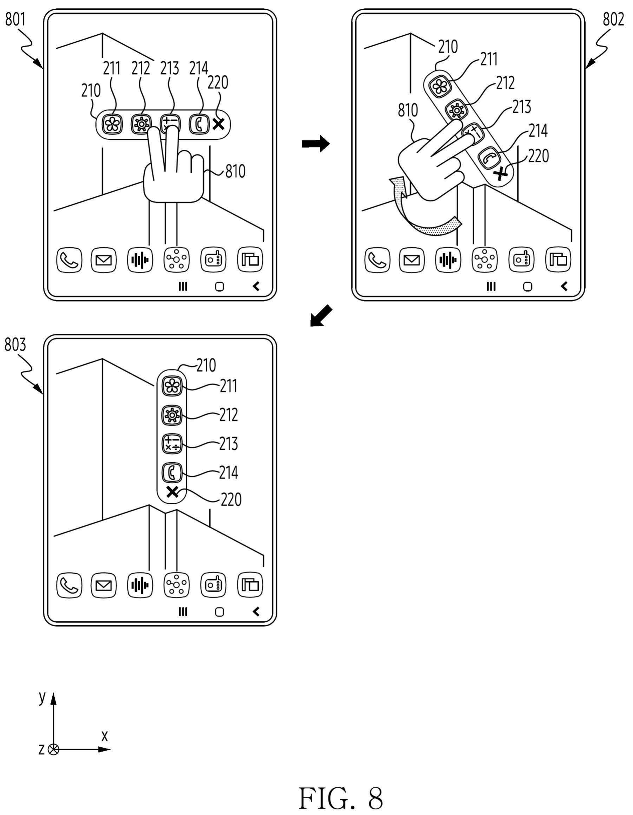

FIG. 8 illustrates an example of changing the orientation of a container object and visual objects. The stacked visual objects may be arranged according to the stack order. The arranged visual objects may be arranged based on one direction (e.g., (+) x-axis direction). However, the direction in which the visual objects are arranged (hereinafter, the arrangement direction) may be changed according to a user input. The descriptions for FIGS. 2 to 7 may be referenced to explain the stacked visual objects.

Referring to FIG. 8, in a first screen 801, the electronic device 101 may display the container object 210 and a plurality of visual objects (e.g., the first visual object 211, the second visual object 212, the third visual object 213, and the fourth visual object 214). For example, the first visual object 211 may include an app icon for a photo application. The second visual object 212 may include an app icon for a settings application. The third visual object 213 may include an app icon for a calculator application. The fourth visual object 214 may include an app icon for a phone application. The electronic device 101 may move the container object 210 and the stacked visual objects on the display. For example, the user of the electronic device 101 may want to change the direction in which the visual objects are arranged from a first direction (e.g., x-axis direction) to a second direction (e.g., y-axis direction). In the first screen 801, the electronic device 101 may receive a user input 810. For example, the user input 810 may include a multi-touch input, a double tap input, a press input, a drag input, a fling input, or a designated gesture input. The multi-touch input may indicate an input (e.g., drag, fling, press, rotation) performed by a plurality of pointers (e.g., finger, pen) touching the screen simultaneously. For example, the user input 810 may include a rotation input using two fingers. The electronic device 101 may display a second screen 802 based on the user input 810.

In the second screen 802, the electronic device 101 may display the container object 210 in rotation and the stacked visual objects therein. For example, the container object 210 and the stacked visual objects may rotate taking the point where the user input 810 is initiated as a fixed point. Based on the user input 810, the stacked visual objects may move in addition to simply changing the arranging direction. According to the movement of the container object 210, the plurality of visual objects displayed on the container object 210 may move together.

In a third screen 803, the electronic device 101 may display the stacked visual objects arranged in a second direction (e.g., y-axis direction) different from a first direction (e.g., x-axis direction) of the first screen 801. For example, the second direction may be substantially perpendicular to the first direction. The shape of the container object 210 may be displayed in a state rotated based on the second direction. For example, the electronic device 101 may display the plurality of visual objects arranged in the second direction and the container object 210 rotated along the second direction, based on the user input 810.

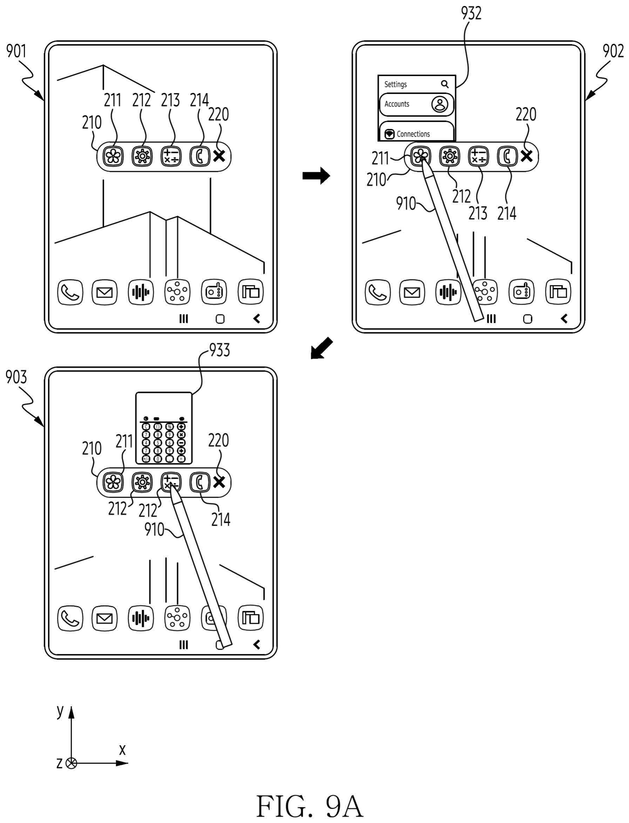

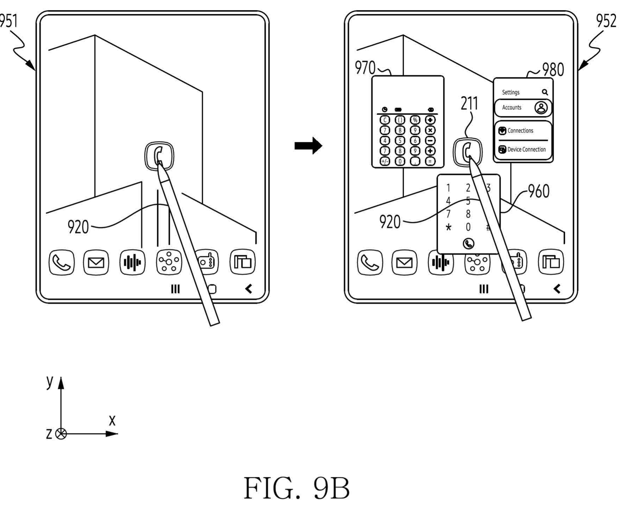

FIGS. 9A and 9B illustrate an example of a preview window of an application associated with a visual object. The preview window may represent at least a portion of an execution screen of the application. The preview window of the application associated with the visual object may be provided based on a user input for the visual object. The descriptions for FIGS. 2 to 8 may be referenced to explain the visual objects.

Referring to FIG. 9A, in a first screen 901, the electronic device 101 may display the container object 210 and a plurality of visual objects (e.g., the first visual object 211, the second visual object 212, the third visual object 213, and the fourth visual object 214). The container object 210 may represent a container for a pop-up window. The stacked visual objects are arranged on the container object 210. The first visual object 211, the second visual object 212, the third visual object 213, and the fourth visual object 214 may be stacked. For example, the first visual object 211 may include an app icon for a photo application. The second visual object 212 may include an app icon for a settings application. The third visual object 213 may include an app icon for a calculator application. The fourth visual object 214 may include an app icon for a phone application. The electronic device 101 may display a preview window of the application associated with the visual object. For example, the user of the electronic device 101 may want to know the execution screen of the application associated with the visual object in advance. The electronic device 101 may receive a user input 910 for the preview. For example, the user input 910 may include a hovering input using a stylus pen, a double tap input, a press input, a drag input, a fling input, or a designated gesture input. Hereinafter, embodiments will be described based on the user input 910 being the hovering input.

In a second screen 902, the electronic device 101 may display a preview window 932 of the application (e.g., the settings application) associated with the second visual object 212, based on the user input 910 for the second visual object 212. For example, the electronic device 101 may display the execution screen of the settings application associated with the second visual object 212 through the preview window 932, based on detecting a hovering input on the second visual object 212. The hovering input may be provided through a stylus pen. In a third screen 903, the electronic device 101 may display a preview window 933 of the application (e.g., the calculator application) associated with the third visual object 213, based on the user input 910 for the third visual object 213. For example, the electronic device 101 may display the execution screen of the calculator application associated with the third visual object 213 through the preview window 933, based on detecting a hovering input on the third visual object 213. The hovering input may be provided through the stylus pen.

In FIG. 9A, an example where a preview window of the application associated with a corresponding visual object is displayed according to a user input (e.g., the hovering input) on an individual visual object has been described. However, even in a situation where a plurality of visual objects are stacked, the user of the electronic device 101 may want to check the execution screen of each visual object without unfolding the stacked visual objects. FIG. 9B describes an example where the electronic device 101 displays a preview window on the screen where a plurality of visual objects are stacked.

Referring to FIG. 9B, in a first screen 951, the electronic device 101 may display the first visual object 211. For example, the first visual object 211 may include an app icon for a phone application. Although not displayed in the first screen 951, a plurality of visual objects may be stacked thereon. For example, the first visual object 211, the second visual object associated with a calculator application, and a third visual object associated with a settings application may be stacked. Since the first visual object 211 is located at the topmost position among the plurality of visual objects, the electronic device 101 may display the first visual object 211. The electronic device 101 may display a preview window of the application associated with each visual object of the stacked visual objects. For example, the user of the electronic device 101 may want to know all the applications associated with the visual objects stacked below the first visual object 211. The electronic device 101 may receive a user input 920. For example, the user input 920 may include a hovering input using a stylus pen, a double tap input, a press input, a drag input, a fling input, or a designated gesture input. Hereinafter, embodiments will be described based on the user input 920 being the hovering input.

In a second screen 952, the electronic device 101 may display the preview windows of the applications associated with the stacked visual objects. The electronic device 101 may identify the stacked visual objects. The electronic device 101 may identify the application of each visual object of the stacked visual objects. The electronic device 101 may display a preview window for each of the identified applications. For example, the electronic device 101 may identify the first visual object 211, the second visual object 212, and the third visual object 213. The electronic device 101 may identify the phone application associated with the first visual object 211, the calculator application associated with the second visual object 212, and the settings application associated with the third visual object 213. The electronic device 101 may display a preview window 960 of the phone application, a preview window 970 of the calculator application, and a preview window 980 of the settings application. For example, the electronic device 101 may display the preview window 960, the preview window 970, and the preview window 980, respectively, around the first visual object 211.

In FIG. 9B, the preview windows of all visual objects are described as being displayed, but embodiments of the disclosure are not limited thereto. According to an embodiment, the electronic device 101 may display a designated number (e.g., three) of preview screens. For example, in a situation where four visual objects are stacked, the electronic device 101 may receive a user input 920. Based on the user input 920, the electronic device 101 may display the preview screens of the applications associated with the top three visual objects. The electronic device 101 may not display the preview screen of the application of the visual object located at the fourth position.

In FIGS. 9A and 9B, a hovering input using a stylus pen is illustrated as an example, but embodiments of the disclosure are not limited thereto. For example, the user input 910 and/or the user input 920 may be a multi-touch input using two fingers. For example, the user input 910 and/or the user input 920 may include a designated gesture. For example, the user input 910 and/or the user input 920 may include a voice command representing displaying of the preview. For example, the user input 910 and/or the user input 920 may include an input of a designated button (e.g., home button, recently executed apps button, volume button, power button, etc.).

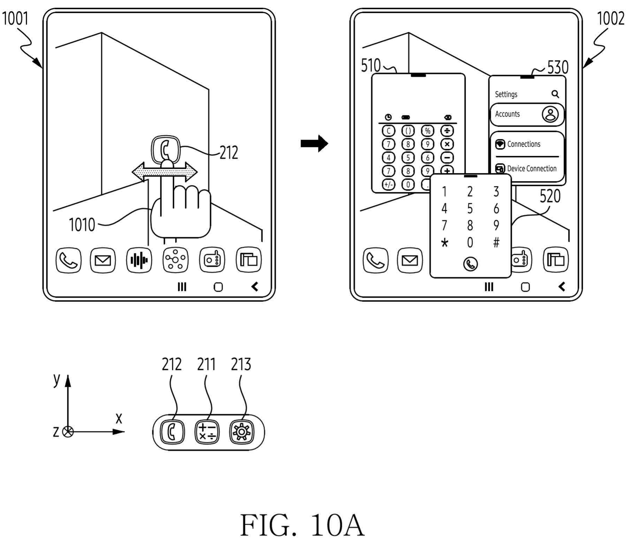

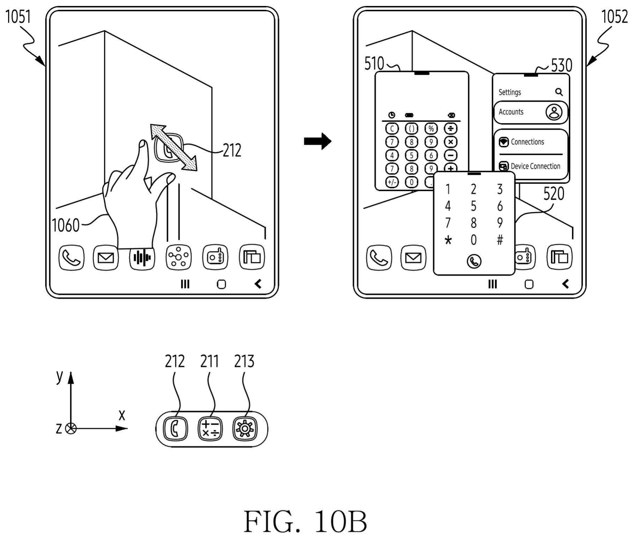

FIGS. 10A and 10B illustrate examples of the display of pop-up windows. A pop-up window may represent an execution screen displayed as a pop-up. The pop-up window may be used to utilize another application while using a home screen or a screen of an application. The descriptions of FIGS. 2 to 9B may be referenced to explain the stacked visual objects and the pop-up windows.

Referring to FIG. 10A, in a first screen 1001, the electronic device 101 may display the second visual object 212. For example, the second visual object 212 may include an app icon for a phone application. Although not displayed in the first screen 1001, a plurality of visual objects may be stacked. For example, the first visual object 211 associated with a calculator application, the second visual object 212, and the third visual object 213 associated with a settings application may be stacked. For example, the visual objects may be stacked in the order of the second visual object 212, the first visual object 211, and the third visual object 213. Since the second visual object 212 is located at the topmost position among the plurality of visual objects, the electronic device 101 may display the second visual object 212. The electronic device 101 may display a pop-up window of the application associated with each visual object of the stacked visual objects. For example, the user of the electronic device 101 may want to know all the applications associated with the visual objects stacked below the second visual object 212. The electronic device 101 may receive a user input 1010. For example, the user input 1010 may include a shaking input, a tap input, a double tap input, a press input (or a long press input, e.g., an touch input maintained for a certain time or more), a drag input, a fling input, or a designated gesture input. The electronic device 101 may display a second screen 1002 based on the user input 1010.

In the second screen 1002, the electronic device 101 may display a plurality of pop-up windows. For example, the electronic device 101 may display a first pop-up window 510. For example, the first pop-up window 510 may represent the execution screen of the first application (e.g., the calculator application). The electronic device 101 may display a second pop-up window 520. For example, the second pop-up window 520 may represent the execution screen of the second application (e.g., the phone application). The electronic device 101 may display a third pop-up window 530. For example, the third pop-up window 530 may represent the execution screen of the third application (e.g., the settings application).

Referring to FIG. 10B, in a first screen 1051, the electronic device 101 may display the second visual object 212. For example, the second visual object 212 may include an app icon for the phone application. Although not displayed in the first screen 1051, a plurality of visual objects may be stacked. For example, the first visual object 211 associated with the calculator application, the second visual object 212, and the third visual object 213 associated with the settings application may be stacked. For example, the visual objects may be stacked in the order of the second visual object 212, the first visual object 211, and the third visual object 213. Since the second visual object 212 is located at the topmost position among the plurality of visual objects, the electronic device 101 may display the second visual object 212. Unlike the user input 1010 illustrated in FIG. 10A, the electronic device 101 may display a second screen 1052 through a pinch-out input 1060 (or zoom-out input). Through the pinch-out input 1060, the pop-up windows corresponding to the stacked visual objects may be displayed more intuitively. In the second screen 1052, the electronic device 101 may display a plurality of pop-up windows. For example, the electronic device 101 may display a first pop-up window 510. For example, the first pop-up window 510 may represent the execution screen of the first application (e.g., the calculator application). The electronic device 101 may display a second pop-up window 520. For example, the second pop-up window 520 may represent the execution screen of the second application (e.g., the phone application). The electronic device 101 may display a third pop-up window 530. For example, the third pop-up window 530 may represent the execution screen of the third application (e.g., the settings application).

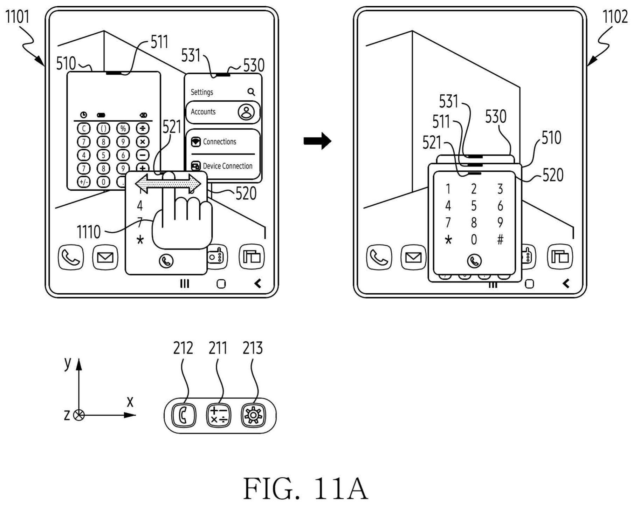

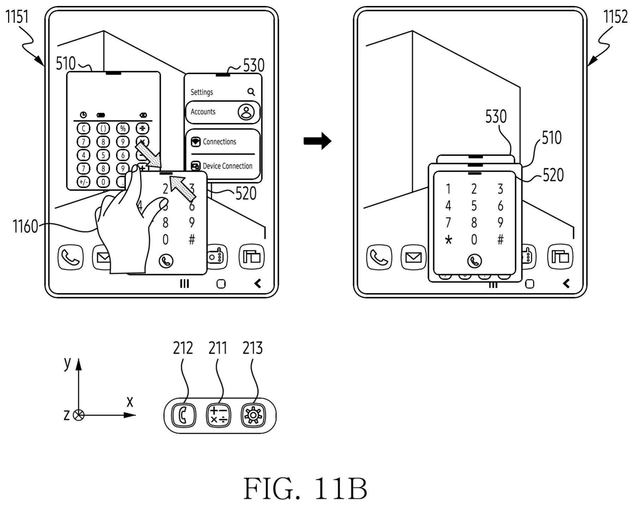

FIGS. 10A and 10B illustrate examples of the pop-up windows being displayed. After the pop-up windows are displayed, the electronic device 101 may stack the visual objects by sequentially minimizing the pop-up windows, as described referring to FIG. 5. Further, after the pop-up windows are displayed, the electronic device 101 may display the pop-up windows so that they overlap within a designated area. The example of the pop-up windows overlapping is described through FIGS. 11A and 11B.

FIGS. 11A and 11B illustrate examples of the sorting of pop-up windows.

Referring to FIG. 11A, in a first screen 1101, the electronic device 101 may display a plurality of pop-up windows. For example, the electronic device 101 may display a first pop-up window 510. For example, the first pop-up window 510 may represent an execution screen of a first application (e.g., a calculator application). The electronic device 101 may display a second pop-up window 520. For example, the second pop-up window 520 may represent an execution screen of a second application (e.g., a phone application). The electronic device 101 may display a third pop-up window 530. For example, the third pop-up window 530 may represent the execution screen of a third application (e.g., a settings application). Each pop-up window may include a handle for movement and/or control. For example, the first pop-up window 510 may include a first handle 511. The second pop-up window 520 may include a second handle 521. The third pop-up window 530 may include a third handle 531. The electronic device 101 may receive a user input 1110. For example, the user input 1110 may include a shaking input, a tap input, a double tap input, a press input (or a long press input), a drag input, a fling input, or a designated gesture input. The electronic device 101 may receive the user input 1110 for the second handle 521. The electronic device 101 may perform and arrangement for the plurality of pop-up windows on the basis of the second pop-up window 520 having the second handle 521, based on the user input 1110 for the second handle 521. The electronic device 101 may display a second screen 1102 based on the user input 1110.

In the second screen 1102, the electronic device 101 may display the arranged plurality of pop-up windows. The electronic device 101 may arrange the pop-up windows according to a predetermined order (e.g., an arrangement order or stack order of the visual objects). For example, referring to the example shown in FIG. 10A, the visual objects may be stacked in the order of the third visual object 213, the first visual object 211, and the second visual object 212. In addition to the second visual object 212 provided with the user input 1110, the third visual object 213 may be followed by the first visual object 211 in the stacking order. Based on the user input 1110, the electronic device 101 may display the second pop-up window 520 at the topmost position. The electronic device 101 may display the second screen 1102 so that the first pop-up window 510 overlaps the third pop-up window 530 thereon, and the second pop-up window 520 overlaps the first pop-up window 510 thereon. For example, the z-index of the second pop-up window 520 may be 1. The z-index of the first pop-up window 510 may be 10. The z-index of the third pop-up window 530 may be 15. The pop-up windows may be arranged in the increasing order of the z-index magnitude. The electronic device 101 may display the other pop-up windows overlapping in an area that includes the second pop-up window 520. The other pop-up windows may include the pop-up windows of the applications (e.g., calculator application, settings application) associated with the visual objects (e.g., first visual object 211, third visual object 213) stacked with the second visual object 212. Since at least a portion of the first pop-up window 510 overlaps the second pop-up window 520, the electronic device 101 may display an area of the first pop-up window 510 that does not overlap the second pop-up window 520. Since at least a portion of the third pop-up window 530 overlaps the first pop-up window 510 and the second pop-up window 520, the electronic device 101 may display an area of the third pop-up window 530 that does not overlap the first pop-up window 510 and the second pop-up window 520.

Referring to FIG. 11B, in a first screen 1151, the electronic device 101 may display a plurality of pop-up windows. For example, the electronic device 101 may display a first pop-up window 510. For example, the first pop-up window 510 may represent an execution screen of a first application (e.g., a calculator application). The electronic device 101 may display a second pop-up window 520. For example, the second pop-up window 520 may represent an execution screen of a second application (e.g., a phone application). The electronic device 101 may display a third pop-up window 530. For example, the third pop-up window 530 may represent an execution screen of a third application (e.g., a settings application). Each pop-up window may include a handle for movement and/or control. For example, the first pop-up window 510 may include a first handle 511. The second pop-up window 520 may include a second handle 521. The third pop-up window 530 may include a third handle 531. Unlike the user input 1110 illustrated in FIG. 11A, the electronic device 101 may display a second screen 1152 through a pinch-in input 1160 (or zoom-in input). For example, the electronic device 101 may receive the pinch-in input 1160 for the second handle 521. The electronic device 101 may perform arrangement for the plurality of pop-up windows on the basis of the second pop-up window 520 having the second handle 521, based on the pinch-in input 1160 for the second handle 521. The electronic device 101 may display the second screen 1152 based on the pinch-in input 1160.

In the second screen 1152, the electronic device 101 may display the arranged plurality of pop-up windows. The electronic device 101 may arrange the pop-up windows according to a predetermined order (e.g., the arrangement order or stack order of the visual objects). For example, referring to the example shown in FIG. 10B, the visual objects may be stacked in the order of the third visual object 213, the first visual object 211, and the second visual object 212. In addition to the second visual object 212 provided with the user input 1020, the third visual object 213 may be followed by the first visual object 211 in the stacking order. Based on the pinch-in input 1160, the electronic device 101 may display the second pop-up window 520 at the topmost position. The electronic device 101 may display the second screen 1152 so that the first pop-up window 510 overlaps the third pop-up window 530 thereon, and the second pop-up window 520 overlaps the first pop-up window 510 thereon. FIG. 11A may be referenced to describe of the arrangement of the pop-up windows.

Although not shown in FIG. 11A and FIG. 11B, the user of the electronic device 101 may want to move a specific pop-up window (e.g., the first pop-up window 510). The electronic device 101 may move the first pop-up window 510 from its current position to another position based on a user input (e.g., drag) for the first handle 511 of the first pop-up window 510. As the first pop-up window 510 is displayed in a different area, the pop-up windows may no longer be arranged.

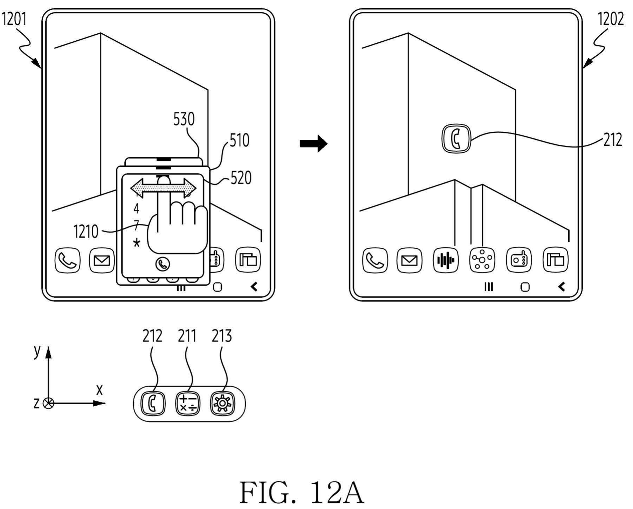

FIGS. 12A to 12B illustrate examples of the minimization of arranged pop-up windows.

Referring to FIG. 12A, in a first screen 1201, the electronic device 101 may display an arranged plurality of pop-up windows. The electronic device 101 may arrange the pop-up windows according to a predetermined order (e.g., the arrangement order or stack order of the visual objects). The electronic device 101 may display the second pop-up window 520 at the topmost position. The electronic device 101 may display the first screen 1201 so that the first pop-up window 510 overlaps the third pop-up window 530 thereon, and the second pop-up window 520 overlaps the first pop-up window 510 thereon. FIGS. 11A and 11B may be referenced to describe the arranged pop-up windows.

The electronic device 101 may receive a user input 1210. For example, the user input 1210 may include a shaking input, a tap input, a double tap input, a press input (or a long press input), a drag input, a fling input, or a designated gesture input. The electronic device 101 may receive the user input 1210 for the second handle 521. The electronic device 101 may perform stacking of visual objects based on the user input 1210 for the second handle 521. The electronic device 101 may stack the visual objects associated with the applications of the pop-up windows displayed on the display. For example, the first visual object 211 may include an app icon related to a calculator application of the first pop-up window 510. The second visual object 212 may include an app icon related to a phone application of the second pop-up window 520. The third visual object 213 may include an app icon related to a settings application of the third pop-up window 530. The electronic device 101 may identify the applications of the pop-up windows displayed on the display. For example, the electronic device 101 may identify the calculator application, the phone application, and the settings application. The electronic device 101 may identify the visual object associated with the application located at the topmost position according to the stack order among the applications. For example, the electronic device 101 may identify the second visual object 212 associated with the phone application. The electronic device 101 may display a second screen 1202 based on the user input 1210.

In the second screen 1202, the electronic device 101 may display the second visual object 212. For example, the second visual object 212 may include the app icon for the phone application. Although not displayed in the second screen 1202, a plurality of visual objects may be stacked. For example, the first visual object 211 associated with the calculator application, the second visual object 212, and the third visual object 213 associated with the settings application may be stacked. Since the second visual object 212 is located at the topmost position among the plurality of visual objects, the electronic device 101 may display the second visual object 212. While the electronic device 101 is displaying the second visual object 212, the applications (e.g., the calculator application, the settings application) of the visual objects stacked below the second visual object 212 may be running in the background. The application in execution in the background may be in a pause state.

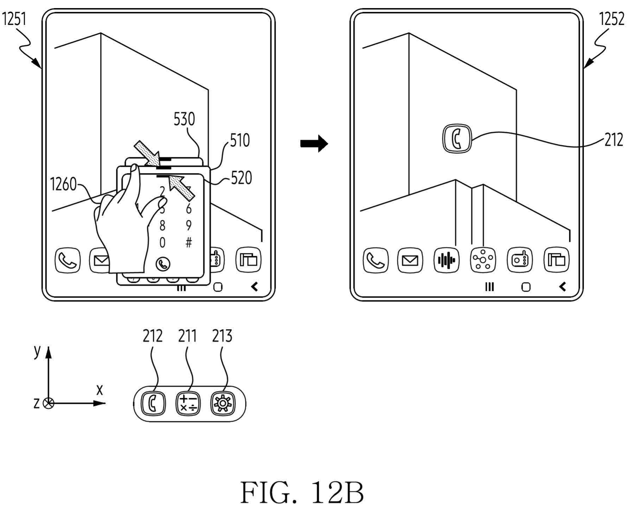

Referring to FIG. 12B, in a first screen 1251, the electronic device 101 may display an arranged plurality of pop-up windows. The electronic device 101 may arrange the pop-up windows according to a predetermined order (e.g., the arrangement order or stack order of the visual objects). The electronic device 101 may display the second pop-up window 520 at the topmost position. The electronic device 101 may display the first screen 1251 so that the first pop-up window 510 overlaps the third pop-up window 530 thereon, and the second pop-up window 520 overlaps the first pop-up window 510 thereon. FIG. 11A or 11B may be referenced to describe the arranged pop-up windows. Unlike the user input 1210 illustrated in FIG. 12A, the electronic device 101 may display a second screen 1252 through a pinch-in input 1260 (or zoom-in input). The electronic device 101 may receive the pinch-in input 1260 for the second handle 521. Through the pinch-in input 1260, the stacking of visual objects may be performed more intuitively. The electronic device 101 may stack the visual objects associated with the applications of the pop-up windows displayed on the display. The electronic device 101 may identify the visual object associated with the application (e.g., the phone application of the second pop-up window 520) located at the topmost position according to the stack order among the applications. For example, the electronic device 101 may identify the second visual object 212 associated with the phone application. The electronic device 101 may display a second screen 1252 through the pinch-in input 1260.

In the second screen 1252, the electronic device 101 may display the second visual object 212. For example, the second visual object 212 may include an app icon for a phone application. Although not displayed in the second screen 1252, a plurality of visual objects may be stacked. For example, the first visual object 211 associated with a calculator application, the second visual object 212, and the third visual object 213 associated with the settings application may be stacked. Since the second visual object 212 is located at the topmost position among the plurality of visual objects, the electronic device 101 may display the second visual object 212. While the electronic device 101 is displaying the second visual object 212, the applications (e.g., calculator application, settings application) of the visual objects stacked below the second visual object 212 may be running in the background. FIG. 12A may be referenced for the description of the minimization of the arranged pop-up windows.

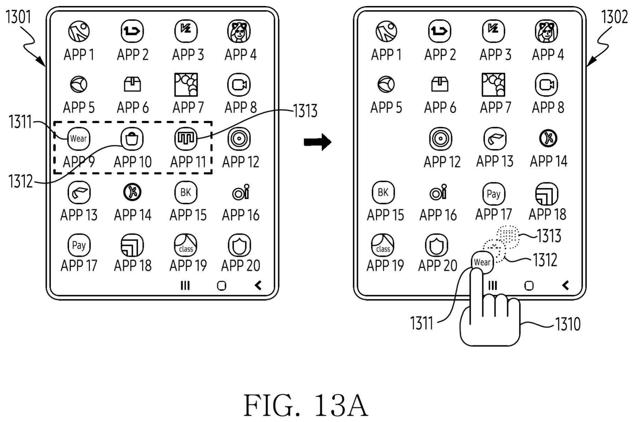

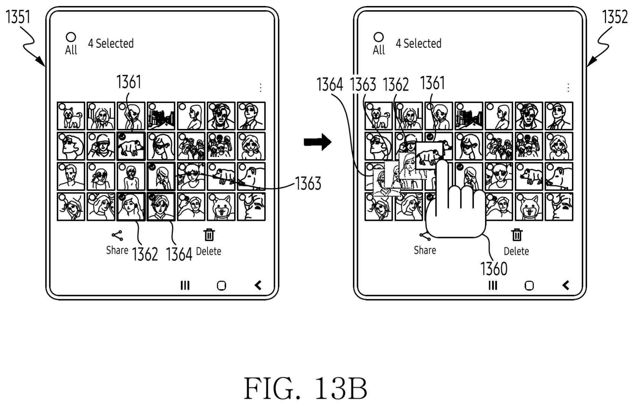

FIGS. 13A and 13B illustrate examples of movement of stacked visual objects.

Referring to FIG. 13A, in a first screen 1301, the electronic device 101 may display a plurality of app icons (e.g., APP 1, APP 2, ..., APP 20). The stacking of visual objects described through FIGS. 2 to 12B may be applied not only to app icons corresponding to minimized pop-up windows but also to the operation of moving a plurality of app icons. The user of the electronic device 101 may want to move the app icons on the screen 1301. For example, the user of the electronic device 101 may want to move the first app icon 1311 (APP 9), the second app icon 1312 (APP 10), and the third app icon 1313 (APP 11). The electronic device 101 may receive user inputs selecting the first app icon 1311, the second app icon 1312, and the third app icon 1313. The electronic device 101 may receive a user input 1310 while the first app icon 1311, the second app icon 1312, and the third app icon 1313 are active. For example, the user input 1310 may include a shaking input, a tap input, a double tap input, a press input (or a long press input), a drag input, a fling input, or a designated gesture input. For example, the electronic device 101 may receive the user input 1310 for the first app icon 1311. The electronic device 101 may display the app icons stacked in the order of the first app icon 1311, the second app icon 1312, and the third app icon 1313, according to the user input 1310. The app icons may be arranged according to the position of the user input 1310 and/or the order arranged within the screen 1301. In case where the user input 1310 for the second app icon 1312 is received, the app icons may be stacked in the order of the second app icon 1312, the first app icon 1311, and the third app icon 1313.

In a second screen 1302, the electronic device 101 may display the stacked app icons (e.g., the first app icon 1311, the second app icon 1312, and the third app icon 1313) in response to the user input 1310. As the user input 1310 moves, the stacked app icons may move together.

According to an embodiment, the opacity of the app icons may differ depending upon the arrangement order of the stacked app icons. For example, the opacity may gradually decrease in the order from the app icon stacked at the topmost position to the app icon stacked at the lowest level. For example, the opacity of the first app icon 1311 may be greater than the opacity of the second app icon 1312. For example, the opacity of the second app icon 1312 may be greater than the opacity of the third app icon 1313.

According to an embodiment, the size of the app icons may differ depending upon the arrangement order of the stacked app icons. For example, the size of the app icons may gradually decrease in the order from the app icon stacked at the topmost position to the app icon stacked at the lowest level. For example, the size of the second app icon 1312 may be smaller than the size of the first app icon 1311. For example, the size of the third app icon 1313 may be smaller than the size of the second app icon 1312.

According to an embodiment, the movement speed may differ depending upon the number of stacked app icons. The electronic device 101 may control the movement speed of one or more app icons (e.g., the second app icon 1312, the third app icon 1313) following the topmost app icon (e.g., the first app icon 1311), based on the number of stacked app icons. For example, the movement speed corresponding to the case where the number of stacked app icons is five may be slower than the movement speed corresponding to the case where the number of stacked app icons is three.

The control of the movement speed may be performed through the relationship between the top app icon and the subsequent app icons. According to an embodiment, the electronic device 101 may display the subsequent app icons through spring animation. The electronic device 101 may set a parameter (e.g., stiffness, damping ratio) for the spring animation based on the number of the stacked app icons. For example, the damping ratio may be set high so that the user of the electronic device 101 feels a faster movement as the number of stacked app icons is relatively less. The damping ratio may be set low so that the user of the electronic device 101 feels a slower movement as the number of stacked app icons is relatively greater. For example, the stiffness may be set low when the number of stacked app icons is smaller. The stiffness may be set relatively higher as the number of stacked app icons is greater. Although the stiffness and damping ratio are illustrated in the disclosure to represent the spring effect, embodiments of the disclosure are not limited thereto. Tension and friction may be used to represent the spring effect. The tension represents the strength of the spring, and the higher the value of the tension, the stronger the object may move like a spring. Further, the friction represents the frictional force of the spring. The higher the value of the friction, the slower its movement may be due to the frictional force of the spring. According to another embodiment, the electronic device 101 may control the movement timing of the subsequent app icon based on the number of the stacked app icons. The electronic device 101 may set the movement timing of the subsequent app icon to be closer to the timing when the movement of the topmost app icon starts, so that the user of the electronic device 101 feels a faster movement as the number of stacked app icons is less. The electronic device 101 may set the movement timing of the subsequent app icon to be farther away than the timing when the movement of the topmost app icon is displayed, so that the user of the electronic device 101 feels a slower movement as the number of stacked app icons is greater.

The stacked app icons may be moved to the position where the user input 1310 is terminated. Then, the electronic device 101 may display the app icons on the grid of the screen 1302 according to the stacked order of the app icons. For example, the electronic device 101 may display the first app icon 1311, the second app icon 1312, and the third app icon 1313 after the app icon of 'APP 20'.

In FIG. 13A, the situation where the app icons are stacked during the movement of the app icons has been described, but embodiments of the disclosure are not limited thereto. In addition to the minimization of a pop-up window or the movement of an app icon, the stacking according to embodiments of the disclosure and the effects of the stacking (e.g., the speed according to the number of stacked visual objects, displaying opacity of the stacked visual objects) may be applied to visual objects that are stacked. According to an embodiment, it may also be applied in a situation where images are moved in a Gallery application. Its detailed example will be described with reference to FIG. 13B.

Referring to FIG. 13B, in a first screen 1351, the electronic device 101 may execute a Gallery application. The electronic device 101 may display a plurality of images. The stacking of visual objects described through FIGS. 2 to 12B may be applied not only to images corresponding to minimized pop-up windows but also to the operation of moving a plurality of images. The user of the electronic device 101 may want to move the images all at once on the screen 1351. For example, the user of the electronic device 101 may want to move a first image 1361, a second image 1362, a third image 1363, and a fourth image 1364. The electronic device 101 may receive user inputs selecting the first image 1361, the second image 1362, the third image 1363, and the fourth image 1364. The electronic device 101 may receive a user input 1360 in a state that the first image 1361, the second image 1362, the third image 1363, and the fourth image 1364 are selected. For example, the user input 1360 may include a shaking input, a tap input, a double tap input, a press input (or a long press input), a drag input, a fling input, or a designated gesture input. For example, the electronic device 101 may receive the user input 1360 on the first image 1311. The electronic device 101 may display the images stacked in the order of the first image 1361, the second image 1362, the third image 1363, and the fourth image 1364, according to the user input 1360. The images may be arranged according to the position of the user input 1360 and/or the order arranged in the screen 1351.

In a second screen 1352, the electronic device 101 may display the stacked images (e.g., the first image 1311, the second image 1312, the third image 1313, and the fourth image 1314) in response to the user input 1360. Following the movement of the user input 1360, the stacked images may move together.

According to an embodiment, the opacity of the images may differ depending upon the arrangement order of the stacked images. For example, the opacity may gradually decrease in the order from the image stacked at the topmost position to the image stacked at the lowest level. For example, the opacity of the first image 1361 may be greater than the opacity of the second image 1362. For example, the opacity of the second image 1362 may be greater than the opacity of the third image 1363. For example, the opacity of the third image 1363 may be greater than the opacity of the fourth image 1364.

According to an embodiment, the size of the images may differ according to the arrangement order of the stacked images. For example, the size of the image may gradually decrease in the order from the image stacked at the topmost position to the image stacked at the lowest level. For example, the size of the second image 1362 may be smaller than the size of the first image 1361. For example, the size of the third image 1363 may be smaller than the size of the second image 1362. For example, the size of the fourth image 1364 may be smaller than the size of the third image 1363.

According to an embodiment, the movement speed may differ depending upon the number of stacked images. The electronic device 101 may control the movement speed of one or more images (e.g., the second image 1362, the third image 1363, the fourth image 1364) that follow the image at the topmost position (e.g., the first image 1361), based on the number of the stacked images. For example, the movement speed corresponding to the case where the number of stacked images is five may be less than the movement speed corresponding to the case where the number of stacked images is three.

The control of the movement speed may be performed through the relationship between the top image and the subsequent images. According to an embodiment, the electronic device 101 may display the subsequent images through spring animation. The electronic device 101 may set a parameter (e.g., stiffness, damping ratio) for the spring animation based on the number of stacked images. For example, the damping ratio may be set high so that the user of the electronic device 101 feels a faster movement as the number of stacked images is less. The damping ratio may be set lower so that the user of the electronic device 101 feels a slower movement as the number of stacked images is greater. For example, the stiffness may be set lower when the number of stacked images is smaller. The stiffness may be set higher as the number of stacked images is greater. In the disclosure, the stiffness and damping ratio are illustrated to represent the spring effect, but embodiments of the disclosure are not limited thereto. Tension and friction may be utilized to represent the spring effect. The tension represents the strength of the spring, and the higher the value of the tension, the stronger an object may move like a spring. Further, the friction represents the frictional force of the spring. The higher the value of the friction, the slower the movement may be due to the frictional force of the spring. According to another embodiment, the electronic device 101 may control the timing of movement of a subsequent image based on the number of stacked images. The electronic device 101 may set the movement timing of the subsequent image closer to the timing when the movement of the image located at the topmost position is initiated, so that the user of the electronic device 101 feels a faster movement as the number of stacked images is less. The electronic device 101 may set the movement timing of the subsequent image to be farther away than the timing when the movement of the image located at the topmost position is displayed, so that the user of the electronic device 101 feels a slower movement as the number of stacked images is greater.

The stacked images may be moved to the position where the user input 1360 is terminated. Then, the electronic device 101 may display the images on the grid of the screen 1352 according to the stacked order of the images.

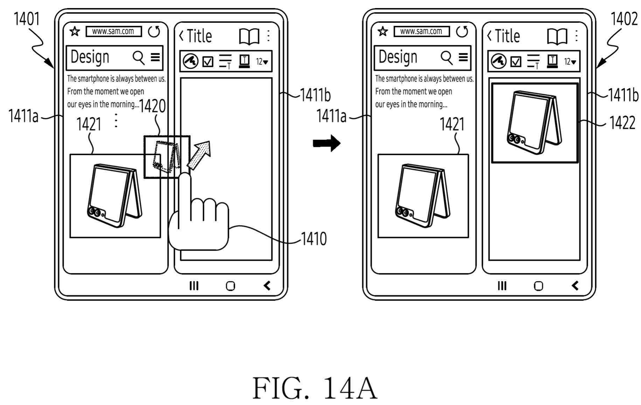

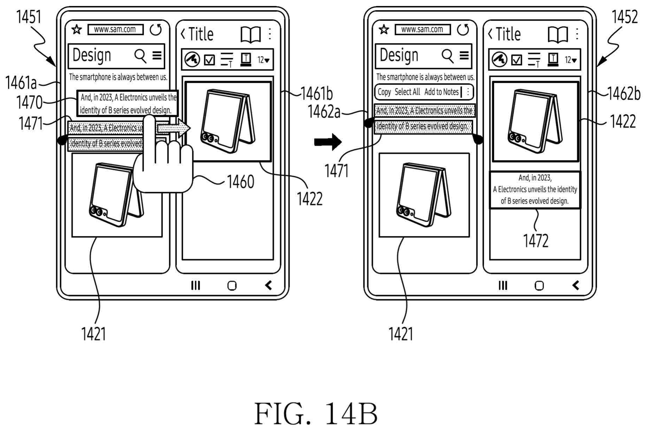

FIGS. 14A and 14B illustrate examples of data movement between applications.

Referring to FIG. 14A, the electronic device 101 may be executing a plurality of applications. For example, the electronic device 101 may be executing a first application (e.g., an internet application) and a second application (e.g., a note application). The descriptions of FIGS. 2 to 13B may also be applied to the movement of data (e.g., images, links, text) between applications.

On a first screen 1401, the electronic device 101 may display a first window 1411a corresponding to the first application and a second window 1411b corresponding to the second application. While displaying the first window 1411a and the second window 1411b, the electronic device 101 may receive a user input 1410. The electronic device 101 may receive the user input 1410 for a first image 1421. For example, the user input 1410 may include dragging the first image 1421 in one direction (e.g., from left to right) or a fling input (e.g., a motion of moving an input object (e.g., finger, pen) and then flicking the first image 1421). For example, the user input 1410 may include designating the first image 1421 that is a target of the movement and/or moving (e.g., drag, fling) the designated first image 1421.

The electronic device 101 may display a selected visual object 1420 in response to the user input 1410. The visual object 1420 may be related to the first image 1421. The visual object 1420 may be the first image 1421 or an image modified from the first image 1421. For example, the size of the visual object 1420 may be smaller than the size of the first image 1421. For example, the transparency of the visual object 1420 may be greater than the transparency of the first image 1421. The electronic device 101 may display a second screen 1402 in response to completion of the user input 1410. On the second screen 1402, the electronic device 101 may display the first window 1411a corresponding to the first application and the second window 1411b corresponding to the note application. While displaying the first window 1411a and the second window 1411b, the electronic device 101 may display a second image 1422 corresponding to the user input 1410. The second image 1422 may correspond to the first image 1421. The electronic device 101 may display the second image 1422 on the second window 1411b so that the first image 1421 of the first application (e.g., the internet application) is available for use in the second application (e.g., the note application). For example, the electronic device 101 may display the second image 1422 on the second window 1411b, such as the result of copying and pasting of the first image 1421. According to an embodiment, the electronic device 101 may copy data of the first image 1421 to a clipboard based on the user input 1410. The electronic device 101 may extract the first image 1421 from the clipboard and display the second image 1422 corresponding to the extracted first image 1421 on the second window 1411b.

FIG. 14A illustrates an example where a single visual object (e.g., the first image 1421) is moved, but embodiments of the disclosure are not limited thereto. For example, an internet link corresponding to the image or other data associated with the image (e.g., a thumbnail image) may be moved to the second application. As another example, an app icon may be moved. A preview window corresponding to the application of the app icon may be displayed on the second application.

FIG. 14A illustrates an example where a single visual object (e.g., the first image 1421) is moved, but embodiments of the disclosure are not limited thereto. The embodiments described through FIGS. 2 to 13B may be applied not only the case where a single visual object is moved but also to a case for the movement of a plurality of visual objects between two applications. According to an embodiment, in case where a user selects and moves images on the first application (e.g., the internet application) all at once, the images may be stacked. Through the user input 1410 (e.g., drag input or fling input), the images may be displayed on the second window 1411b of the second application (e.g., the note application).

Referring to FIG. 14B, the electronic device 101 may be executing a plurality of applications. For example, the electronic device 101 may be executing a first application (e.g., an internet application) and a second application (e.g., a note application). The descriptions of FIGS. 2 to 13B may also be applied to the movement of data (e.g., images, links, text) between applications.

On a first screen 1451, the electronic device 101 may display a first window 1461a corresponding to the first application and a second window 1461b corresponding to the second application. On the second window 1461b of the first screen 1451, the electronic device 101 is displaying a second image 1422. While displaying the first window 1461a and the second window 1461b, the electronic device 101 may receive a user input 1460. The electronic device 101 may receive the user input 1460 for a first text 1471. For example, the user input 1410 may include dragging the first text 1471 in one direction (e.g., from left to right) or a fling input (e.g., a motion of moving an input object (e.g., a finger, a pen) and then flicking the first text 1471). For example, the user input 1460 may include designating the first text 1471 that is the target of the movement and/or moving the designated first text 1471 (e.g., drag, fling).

The electronic device 101 may display a selected visual object 1470 in response to the user input 1460. The visual object 1470 may be related to the first text 1471. The visual object 1470 may be the first text 1471. The electronic device 101 may display a second screen 1452 in response to completion of the user input 1460. On the second screen 1452, the electronic device 101 may display a first window 1462a corresponding to the first application and a second window 1462b corresponding to the second application. While displaying the first window 1462a and the second window 1462b, the electronic device 101 may display a second text 1472 corresponding to the user input 1460. The second text 1472 may be identical to the first text 1471. The electronic device 101 may display the second text 1472 on the second window 1462b so that the first text 1471 of the first application is available for use in the second application (e.g., the note application). For example, the electronic device 101 may display the second text 1472 on the second window 1462b, similar to the result of copying and pasting of the first text 1471. According to an embodiment, the electronic device 101 may copy the data of the first text 1471 to a clipboard based on the user input 1460. The electronic device 101 may extract the first text 1471 from the clipboard and display the second text 1472 corresponding to the extracted first text 1471 on the second window 1462b.

FIG. 14B illustrates an example where a single visual object (e.g., the first text 1471) is moved, but embodiments of the disclosure are not limited thereto. For example, an internet link that includes a text or data associated with the text (e.g., a thumbnail image) may be moved to the second application. As another example, an app icon may be moved. A preview window corresponding to the application of the app icon may be displayed on the second application.

FIG. 14B illustrates an example where a single visual object (e.g., the second text 1472) is moved, but embodiments of the disclosure are not limited thereto. The embodiments described through FIGS. 2 to 13B may be applied not only the case where a single visual object is moved but also to the movement of a plurality of visual objects between two applications (e.g., moving of texts, moving of images, or moving together of different types of objects such as texts and images). According to an embodiment, in a situation where an image and a text on the first application (e.g., the internet application) are selected at once, the text and the image may be stacked based on a user input (e.g., touch, fling, drag). The user input may move the selected image and text. Unlike the examples shown in FIGS. 14A and 14B, the first image 1421 and the first text 1471 may be moved together. For example, the first text 1471 may be stacked on top of the first image 1421. When the user input is completed, the second text 1472 corresponding to the first text 1471 and the second image 1422 corresponding to the first image 1421 may be displayed on the second window 1462b of the second application, according to the stacked order (e.g., first text 1471, first image 1421).

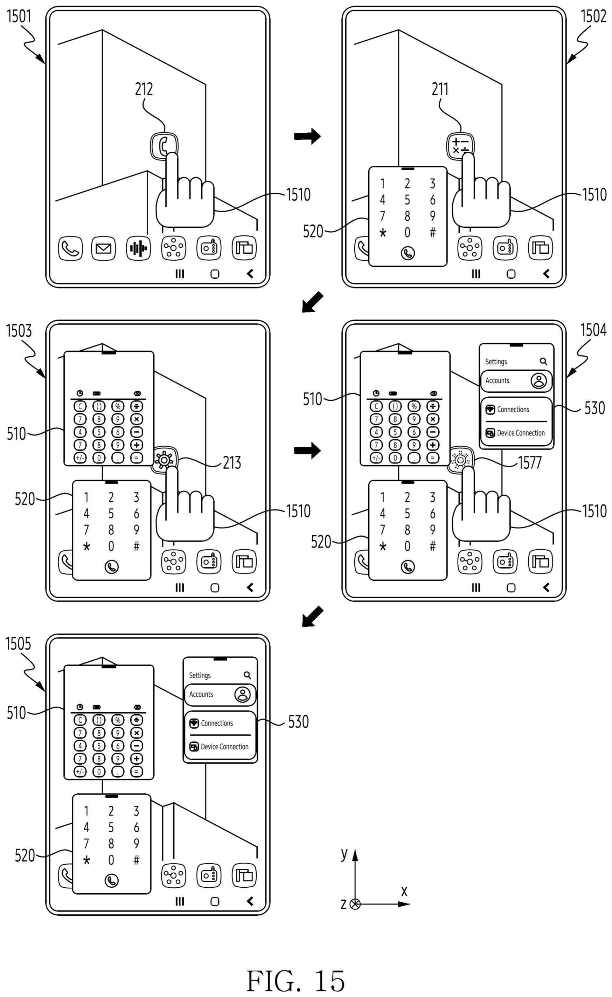

FIG. 15 illustrates an example of displaying of pop-up windows.

Referring to FIG. 15, in a first screen 1501, the electronic device 101 may display the second visual object 212. For example, the second visual object 212 may include an app icon for a phone application. Although not displayed in the first screen 1501, a plurality of visual objects may be stacked. For example, the first visual object 211 associated with the calculator application, the second visual object 212, and the third visual object 213 associated with the settings application may be stacked. For example, the visual objects may be stacked in the order of the second visual object 212, the first visual object 211, and the third visual object 213. Since the second visual object 212 is located at the topmost position among the plurality of visual objects, the electronic device 101 may display the second visual object 212.

The electronic device 101 may display a pop-up window of the application associated with each visual object in the stacked visual objects. For example, the user of the electronic device 101 may want to know all the applications associated with the visual objects stacked below the second visual object 212. The electronic device 101 may receive a user input 1510. The user input 1510 may be an input that a touch input is maintained for a certain period of time (hereinafter, may be referred to as a long press input). While the user input 1510 is maintained on the visual object located at the top, the stacked visual objects may be displayed sequentially. For example, in response to the user input 1510, the electronic device 101 may sequentially display a second screen 1502, a third screen 1503, a fourth screen 1504, and a fifth screen 1505.

In the second screen 1502, the electronic device 101 may display a second pop-up window 520. The second pop-up window 520 may represent an execution screen of a second application (e.g., the phone application). While the second pop-up window 520 is displayed, a first visual object 211 stacked next to the second visual object 212 may be displayed. The first visual object 211 may be displayed at the point where the second visual object 212 was located in the first screen 1501. The user input 1510 may be in a state of being input on the point where the first visual object 211 is located. In the third screen 1503, the electronic device 101 may display a first pop-up window 510. The first pop-up window 510 may represent an execution screen of the first application (e.g., the calculator application). While the first pop-up window 510 and the second pop-up window 520 are displayed, a third visual object 213 stacked next to the first visual object 211 may be displayed. The third visual object 213 may be displayed at the point where the first visual object 211 was located in the second screen 1502. The point where the first visual object 211 was located in the second screen 1502 may be the same as the point where the second visual object 212 was located in the first screen 1501. The user input 1510 may be in a state of being input on the point where the third visual object 213 is located. In the fourth screen 1504, the electronic device 101 may display a third pop-up window 530. The third pop-up window 530 may represent an execution screen of the third application (e.g., the settings application). The electronic device 101 may determine that there are no more stacked visual objects. In response to the determination, the electronic device 101 may identify the third visual object 213, which is the last visual object among the stacked visual objects. The electronic device 101 may display a visual object 1577 in which a visual effect (e.g., displayed transparently) is applied to the third visual object 213. While the first pop-up window 510, the second pop-up window 520, and the third pop-up window 530 are displayed, the visual object 1577 may be displayed. Then, on the fifth screen 1505, the electronic device 101 may display the first pop-up window 510, the second pop-up window 520, and the third pop-up window 530. The visual object 1577 may no longer be displayed on the fifth screen 1505. For example, in case that a certain time (e.g., 3 seconds) elapses after displaying the pop-up window (e.g., the third pop-up window 530) of the last stacked visual object (e.g., the third visual object 213), the visual object 1577 may not be displayed. For example, in case that the user input 1510 for the visual object 1577 is released, the electronic device 101 may display the first pop-up window 510, the second pop-up window 520, and the third pop-up window 530, and may no longer display the visual object 1577.

FIG. 15 describes an example where the user input 1510 is maintained until all the pop-up windows corresponding to the stacked visual objects are displayed, but embodiments of the disclosure are not limited thereto. For example, the user input 1510 may be released on the second screen 1502. In case that the press input, which is the user input 1510, is released, while the first visual object 211 is displayed, the electronic device 101 may display the second pop-up window 520, and may no longer perform additional operations (e.g., third screen 1503, fourth screen 1504, fifth screen 1505). For example, the user input 1510 may be released on the third screen 1503. In case that the press input, which is the user input 1510, is released, while the third visual object 213 is displayed, the electronic device 101 may display the first pop-up window 510 and the second pop-up window 520, and may no longer perform additional operations (e.g., fourth screen 1504, fifth screen 1505).

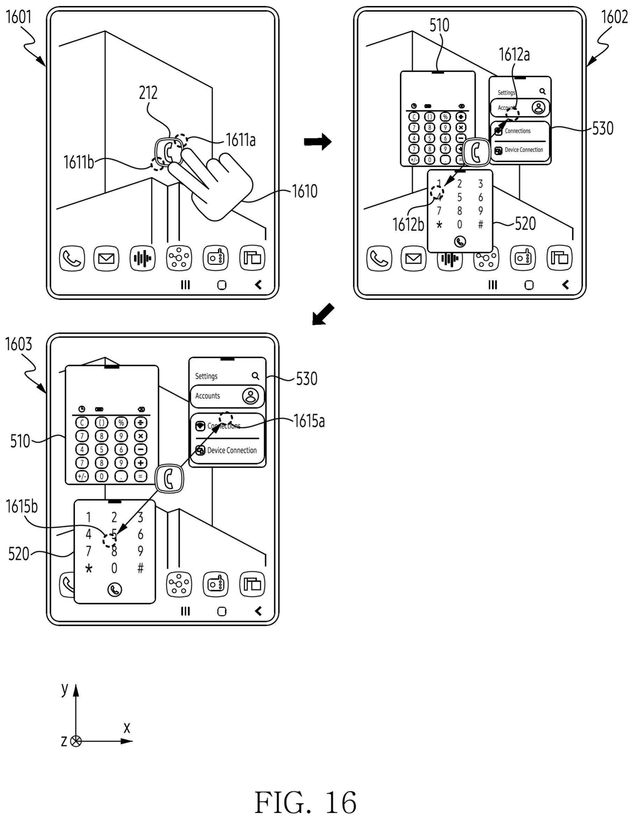

FIG. 16 illustrates an example of displaying of pop-up windows according to a pinch-out gesture.

Referring to FIG. 16, in a first screen 1601, the electronic device 101 may display the second visual object 212. For example, the second visual object 212 may include an app icon for a phone application. Although not displayed in the first screen 1601, a plurality of visual objects may be stacked. For example, the first visual object 211 associated with the calculator application, the second visual object 212, and the third visual object 213 associated with the settings application may be stacked. For example, the visual objects may be stacked in the order of the second visual object 212, the first visual object 211, and the third visual object 213. Since the second visual object 212 is located at the topmost position among the plurality of visual objects, the electronic device 101 may display the second visual object 212. The electronic device 101 may receive a pinch-out input 1610 (or zoom-out input) on the second visual object 212. Through the pinch-out input 1610, the pop-up windows corresponding to the stacked visual objects may be displayed more intuitively. The pinch-out input 1610 may include a motion of spreading two fingers apart. For example, the electronic device 101 may detect touches at a first point 1611a and a second point 1611b, and may determine that the touch at the first point 1611a is moving away from the touch at the second point 1611b. According to an embodiment, each pop-up window may be displayed at a position corresponding to the point where the pinch-out input 1610 is terminated. For example, the position of each pop-up window may be determined based on the point where the touch starting at the first point 1611a is terminated and the point where the touch starting at the second point 1611b is terminated.

In a second screen 1602, the electronic device 101 may display a plurality of pop-up windows. For example, the electronic device 101 may display the plurality of pop-up windows in a first arrangement. Through the pinch-out input 1610, the touch starting at the first point 1611a may be located at a third point 1612a. Through the pinch-out input 1610, the touch starting at the second point 1611b may be located at a fourth point 1612b. The electronic device 101 may display the plurality of pop-up windows within the area corresponding to the third point 1612a and the fourth point 1612b. The electronic device 101 may display the first pop-up window 510. For example, the first pop-up window 510 may represent the execution screen of a first application (e.g., a calculator application). The electronic device 101 may display the second pop-up window 520. For example, the second pop-up window 520 may represent an execution screen of the second application (e.g., phone application). The electronic device 101 may display the third pop-up window 530. For example, the third pop-up window 530 may represent an execution screen of the third application (e.g., settings application). In case that the touches in the pinch-out input 1610 are not released, the electronic device 101 may change the position of the pop-up windows by adjusting a distance between the touches. For example, the pinch-out input 1610 may be in an input state. The electronic device 101 may display each pop-up window in a preview form (e.g., a preview window) in the second screen 1602, and may display a third screen 1603. In the third screen 1603, the electronic device 101 may display a plurality of pop-up windows. For example, the electronic device 101 may display the plurality of pop-up windows in a second arrangement. Through the pinch-out input 1610, the touch starting at the first point 1611a may be located at a fifth point 1615a. Through the pinch-out input 1610, the touch starting at the second point 1611b may be located at a sixth point 1615b. The electronic device 101 may display the plurality of pop-up windows within the area corresponding to the fifth point 1615a and the sixth point 1615b. The area covering the plurality of pop-up windows according to the second arrangement may be greater than the area covering the plurality of pop-up windows (or preview windows) according to the first arrangement.

In FIG. 16, an example is described where the second screen 1602 and the third screen 1603 are displayed sequentially through a single pinch-out input 1610, but embodiments of the disclosure are not limited thereto. For example, in case that the touches of the pinch-out input 1610 are released at the third point 1612a and the fourth point 1612b, the electronic device 101 may display the plurality of pop-up windows at the third point 1612a and the fourth point 1612b. For example, the electronic device 101 may display the plurality of pop-up windows in a normal form (e.g., a form having an opacity of 1) instead of the preview windows displayed in a preview form (e.g., a form having an opacity of less than 1). According to an embodiment, the electronic device 101 may display the plurality of pop-up windows in case that the distance between the touches in the pinch-out input 1610 is greater than or equal to a threshold distance. For example, the electronic device 101 may display the preview windows corresponding to the stacked visual objects in response to the pinch-out input 1610. The preview windows may be displayed within the area corresponding to the distance between the touches of the pinch-out input 1610. In case that the distance between the touches is less than the threshold distance, upon termination of the pinch-out input 1610 (e.g., when the touches are released), the electronic device 101 may terminate displaying of the preview windows and display the second visual object 212. The electronic device 101 may display the stacked visual objects. For example, the electronic device 101 may display the first screen 1601 in case that the distance between the touches is less than the threshold distance. Upon termination of the pinch-out input 1610 (e.g., when the touches are released), in case that the distance between the touches is greater than or equal to the threshold distance, the electronic device 101 may display the plurality of pop-up windows. For example, the electronic device 101 may display the third screen 1603 in case that the distance between the touches is greater than or equal to the threshold distance.

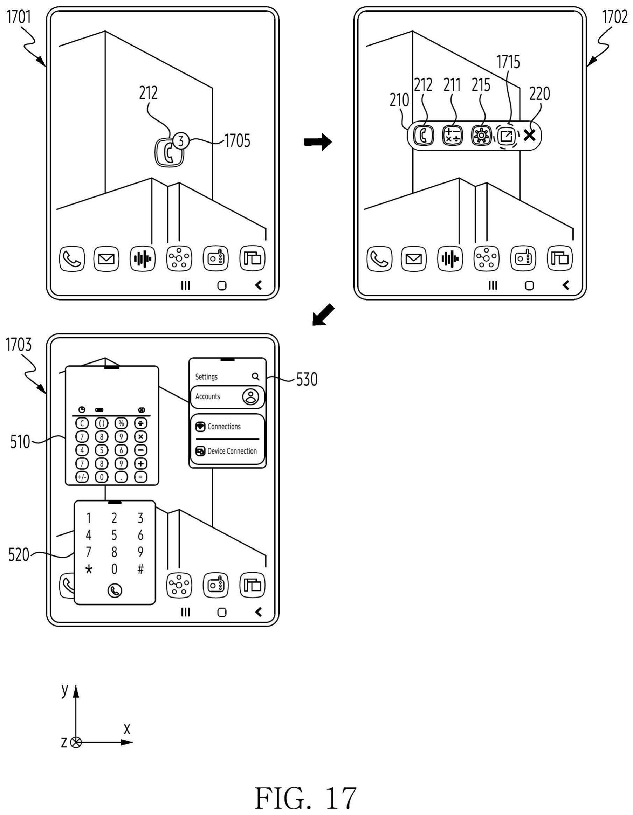

FIG. 17 illustrates an example of a visual object for displaying pop-up windows.

Referring to FIG. 17, in a first screen 1701, the electronic device 101 may display the second visual object 212. For example, the second visual object 212 may include an app icon for a phone application. Although not displayed in the first screen 1701, a plurality of visual objects may be stacked. For example, the first visual object 211 associated with the calculator application, the second visual object 212, and the third visual object 213 associated with the settings application may be stacked. For example, the visual objects may be stacked in the order of the second visual object 212, the first visual object 211, and the third visual object 213. Since the second visual object 212 is located at the topmost position among the plurality of visual objects, the electronic device 101 may display the second visual object 212. The electronic device 101 may further display a visual object 1705 to indicate the number of stacked visual objects. The visual object 1705 may be displayed on the second visual object 212 or adjacent to the second visual object 212. For example, the visual object 1705 may be displayed in the form of a badge on the second visual object 212.

The electronic device 101 may receive a user input for the first visual object 211. For example, the user input may include a tap input, a double tap input, a press input, a drag input, a fling input, or a designated gesture input. Based on the user input 205, the electronic device 101 may display a container 210 for the first visual object 211. The electronic device 101 may display one or more visual objects (e.g., the second visual object 212 and the third visual object 213) stacked together with the first visual object 211. For example, the electronic device 101 may display a second screen 1702. In the second screen 1702, the electronic device 101 may display the container object 210 and the plurality of visual objects (e.g., the first visual object 211, the second visual object 212, the third visual object 213) via a display (e.g., display module 160). For an explanation of the container object 210, the description of FIG. 2 may be referenced. The electronic device 101 may display a pop-up button 1715 via the container object 210. The pop-up button 1715 may be used to display the pop-up windows of the stacked visual objects, respectively. For example, the electronic device 101 may receive a user input on the pop-up button 1715. In response to the user input, the electronic device 101 may display a third screen 1703. In response to the user input, the electronic device 101 may display the first pop-up window 510, the second pop-up window 520, and the third pop-up window 530.

In embodiments, an electronic device is provided. The electronic device may include memory storing instructions, a processor, and a display. The instructions, when executed by the processor, may cause the electronic device to display a first visual object at a top of a plurality of visual objects stacked according to an arrangement order at a first point through the display, display one or more visual objects different from the first object among the plurality of visual objects through the display, while the first visual object is displayed to move in response to a user input for the first visual object, and display, after the user input, the first visual object at a second point according to the user input through the display. The one or more visual objects may be displayed to follow a movement path of the first visual object sequentially according to the arrangement order, while the first visual object is displayed to move.

According to an embodiment, the user input may comprise a drag input or a filing input. Each visual object of the plurality of visual objects may comprise an app icon being executed in the electronic device.

According to an embodiment, while the first visual object is displayed at the first point or the second point, the other visual objects may not be displayed.

According to an embodiment, an opacity of the first visual object may be greater than an opacity of each visual object of the one or more visual objects. A size of the first visual object may be greater than a size of each visual object of the one or more visual objects.

According to an embodiment, the one or more visual objects may include a second visual object and a third visual object. The third visual object may be positioned under the second visual object according to the arrangement order. An opacity of the third visual object may be set to be lower than an opacity of the second visual object. A size of the third visual object may be smaller than a size of the first visual object.

According to an embodiment, a movement speed of the one or more objects displayed to follow the movement path of the first visual object, while the first visual object is displayed to move, may be determined based on the number of the plurality of visual objects.

According to an embodiment, the instructions, when executed by the processor, may cause the electronic device to display a plurality of pop-up windows through the display, and display the first visual object, based on receiving at least one user input for reducing each pop-up window of the plurality of pop-up windows. The first visual object may indicate an application corresponding to a pop-up window most recently used among the plurality of pop-up windows.

According to an embodiment, the instructions, when executed by the processor, may cause the electronic device to display a container object and the plurality of visual objects on the container object through the display, based on a first user input for the first visual object. The plurality of visual objects may be arranged on the container object in a designated direction according to the arrangement order. The first user input may comprise a tap input.

According to an embodiment, the instructions, when executed by the processor, may cause the electronic device to receive a second user input for moving one of the plurality of visual objects to another area on the container, while the plurality of visual objects and the container object are displayed, and display the plurality of visual objects based on the arrangement order changed according to the second user input. The second user input may comprise a drag input.

According to an embodiment, the instructions, when executed by the processor, may cause the electronic device to display, based on a third user input for the container object while the plurality of visual objects and the container object are displayed, the container object and the plurality of visual objects at a position indicated by the third user input. The plurality of visual objects may be arranged on the container object in the designated direction according to the arrangement order after the third user input. The third user input may comprise a drag input using a multi-touch.

According to an embodiment, the instructions, when executed by the processor, may cause the electronic device to display, based on a fourth user input for the container object while the plurality of visual objects and the container object are displayed, the container object and the plurality of visual objects at a position indicated by the fourth user input. The plurality of visual objects may be arranged on the container object in a direction substantially perpendicular to the designated direction according to the arrangement order after the fourth user input. The fourth user input may comprise a rotation input using a multi-touch,

According to an embodiment, the instructions, when executed by the processor, may cause the electronic device to display, based on a fifth user input for a visual object among the plurality of visual objects, a preview window of an application associated with the visual object through the display. The fifth user input may comprise a hovering input using a stylus pen.

According to an embodiment, the instructions, when executed by the processor, may cause the electronic device to receive a sixth user input for the first visual object at the top of the plurality of stacked visual objects, and display, based on the sixth user input, a plurality of pop-up windows associated with the plurality of visual objects through the display.

According to an embodiment, the instructions, when executed by the processor, may cause the electronic device to receive a seventh user input for a handle of a designated pop-up window among the plurality of pop-up windows, and display, based on the seventh user input, the plurality of pop-up windows such that the plurality of pop-up windows are superimposed within an area including the designated pop-up window. The designated pop-up window may be displayed at the top of the plurality of superimposed pop-up windows.

According to an embodiment, the instructions, when executed by the processor, may cause the electronic device to receive an eighth user input for a handle of the designated pop-up window, and based on the eighth user input, display a visual object of an application corresponding to the designated pop-up window through the display, without displaying the superimposed plurality of pop-up windows. The plurality of visual objects may be stacked based on the first visual object placed at the top position.

According to an embodiment, the instructions, when executed by the processor, may cause the electronic device to display a plurality of preview windows associated with the plurality of visual objects through the display, based on a ninth user input for the first visual object.

In an embodiment, a method performed by an electronic device is provided. The method may comprise displaying a first visual object at a top of a plurality of visual objects stacked according to an arrangement order at a first point through the display. The method may comprise displaying one or more visual objects different from the first object among the plurality of visual objects through the display, while the first visual object is displayed to move in response to a user input for the first visual object. The method may comprise displaying, after the user input, the first visual object at a second point according to the user input through the display. The one or more visual objects may be displayed to follow a movement path of the first visual object sequentially according to the arrangement order, while the first visual object is displayed to move.

According to an embodiment, the user input may comprise a drag input or a filing input. Each visual object of the plurality of visual objects may comprise an app icon being executed in the electronic device.

According to an embodiment, while the first visual object is displayed at the first point or the second point, the other visual objects may not be displayed.

According to an embodiment, an opacity of the first visual object may be greater than an opacity of each visual object of the one or more visual objects. A size of the first visual object may be greater than a size of each visual object of the one or more visual objects.

According to an embodiment, a movement speed of the one or more objects displayed to follow the movement path of the first visual object, while the first visual object is displayed to move, may be determined based on the number of the plurality of visual objects.

In an embodiment, a non-transitory computer-readable medium is provided. The non-transitory computer-readable medium may comprise a memory storing instructions. The instructions, when executed by a processor, may cause an electronic device to display a first visual object at a top of a plurality of visual objects stacked according to an arrangement order at a first point through a display, display one or more visual objects different from the first object among the plurality of visual objects through the display, while the first visual object is displayed to move in response to a user input for the first visual object, and display, after the user input, the first visual object at a second point according to the user input through the display. The one or more visual objects may be displayed to follow a movement path of the first visual object sequentially according to the arrangement order, while the first visual object is displayed to move.

The electronic device according to various embodiments disclosed herein may be one of various types of electronic devices. The electronic devices may include, for example, a portable communication device (e.g., a smartphone), a computer device, a portable multimedia device, a portable medical device, a camera, a wearable device, or a home appliance. In an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). In case where an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may be interchangeably used with other terms, for example, 'logic', 'logic block', 'part', 'portion', or 'circuit'. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments disclosed herein may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
memory storing instructions;
a processor; and
a display,
wherein the instructions, when executed by the processor, cause the electronic device to:
display a first visual object at a top of a plurality of visual objects stacked according to an arrangement order at a first point through the display,
display one or more visual objects different from the first object among the plurality of visual objects through the display while the first visual object is displayed to move in response to a user input for the first visual object, and
display, after the user input, the first visual object at a second point according to the user input through the display, and
wherein the one or more visual objects are displayed to follow a movement path of the first visual object sequentially according to the arrangement order while the first visual object is displayed to move.

2. The electronic device of claim 1,
wherein the user input comprises a drag input or a filing input, and
wherein each visual object of the plurality of visual objects comprises app icon executed in the electronic device.

3. The electronic device of claim 1,
wherein an opacity of the first visual object is higher than an opacity of each visual object of the one or more visual objects, and
wherein a size of the first visual object is greater than a size of each visual object of the one or more visual objects.

4. The electronic device of claim 3,
wherein the one or more visual objects includes a second visual object and a third visual object,
wherein the third visual object is positioned under the second visual object according to the arrangement order,
wherein an opacity of the third visual object is set to be lower than an opacity of the second visual object, and
wherein a size of the third visual object is smaller than a size of the first visual object.

5. The electronic device of claim 1,
wherein a movement speed of the one or more objects displayed to follow the movement path of the first visual object while the first visual object is displayed to move is determined based on the number of the plurality of visual objects.

6. The electronic device of claim 1,
wherein the instructions, when executed by the processor, cause the electronic device to:
display a plurality of pop-up windows through the display, and
display the first visual object based on receiving at least one user input for reducing each pop-up window of the plurality of pop-up windows, and
wherein the first visual object indicates an application corresponding to a pop-up window most recently used among the plurality of pop-up windows.

7. The electronic device of claim 1,
wherein the instructions, when executed by the processor, cause the electronic device to display a container object and the plurality of visual objects on the container object through the display, based on a first user input for the first visual object,
wherein the plurality of visual objects are arranged on the container object in a designated direction according to the arrangement order, and
wherein the first user input comprises a tap input.

8. The electronic device of claim 7,
wherein the instructions, when executed by the processor, cause the electronic device to:
receive a second user input for moving one of the plurality of visual objects to another area on the container while the plurality of visual objects and the container object are displayed, and
display the plurality of visual objects based on the arrangement order changed according to the second user input, and
wherein the second user input comprises a drag input.

9. The electronic device of claim 7,
wherein the instructions, when executed by the processor, cause the electronic device to display, based on a third user input for the container object while the plurality of visual objects and the container object are displayed, the container object and the plurality of visual objects at a position indicated by the third user input,
wherein the plurality of visual objects are arranged on the container object in the designated direction according to the arrangement order after the third user input, and
wherein the third user input comprises a drag input using a multi-touch.

10. The electronic device of claim 7,
wherein the instructions, when executed by the processor, cause the electronic device to display, based on a fourth user input for the container object while the plurality of visual objects and the container object are displayed, the container object and the plurality of visual objects at a position indicated by the fourth user input,
wherein the plurality of visual objects are arranged on the container object in a direction substantially perpendicular to the designated direction according to the arrangement order after the fourth user input, and
wherein the fourth user input comprises a rotation input using a multi-touch,

11. The electronic device of claim 7,
wherein the instructions, when executed by the processor, cause the electronic device to display, based on a fifth user input for a visual object among the plurality of visual objects, a preview window of an application associated with the visual object through the display, and
wherein the fifth user input comprises a hovering input using a stylus pen.

12. The electronic device of claim 1,
wherein the instructions, when executed by the processor, cause the electronic device to:
receive a sixth user input for the first visual object at the top of the plurality of stacked visual objects, and
display, based on the sixth user input, a plurality of pop-up windows associated with the plurality of visual objects through the display,

13. The electronic device of claim 12,
wherein the instructions, when executed by the processor, cause the electronic device to:
receive a seventh user input for a handle of a designated pop-up window among the plurality of pop-up windows; and
display, based on the seventh user input, the plurality of pop-up windows such that the plurality of pop-up windows are superimposed within an area including the designated pop-up window, and
wherein the designated pop-up window is displayed at the top of the plurality of superimposed pop-up windows.

14. A method performed by an electronic device, the method comprising:
displaying a first visual object at a top of a plurality of visual objects stacked according to an arrangement order at a first point through the display,
displaying one or more visual objects different from the first object among the plurality of visual objects through the display while the first visual object is displayed to move in response to a user input for the first visual object, and
displaying, after the user input, the first visual object at a second point according to the user input through the display,
wherein the one or more visual objects are displayed to follow a movement path of the first visual object sequentially according to the arrangement order while the first visual object is displayed to move.

15. A non-transitory computer-readable medium, comprising a memory storing instructions, wherein the instructions, when executed by a processor, cause an electronic device to:
display a first visual object at a top of a plurality of visual objects stacked according to an arrangement order at a first point through a display,
display one or more visual objects different from the first object among the plurality of visual objects through the display while the first visual object is displayed to move in response to a user input for the first visual object, and
display, after the user input, the first visual object at a second point according to the user input through the display, and
wherein the one or more visual objects are displayed to follow a movement path of the first visual object sequentially according to the arrangement order while the first visual object is displayed to move.
